# EUROPÄISCHE PATENTSCHRIFT

(11) **EP 3 623 321 B1**
(45) Veröffentlichungstag und Bekanntmachung des Hinweises auf die Patenterteilung: **29.03.2023**
(21) Anmeldenummer: 19192933.0
(22) Anmeldetag: 21.08.2019
(51) Int. Cl.: B65G 15/46, B65G 15/64, B65G 23/06, B65G 39/071, B29D 29/06

(54) **TRANSPORTSYSTEM, VERFAHREN ZUR HERSTELLUNG DES TRANSPORTSYSTEMS**
TRANSPORT SYSTEM, METHOD FOR PRODUCING THE TRANSPORT SYSTEM
SYSTÈME DE TRANSPORT, PROCÉDÉ DE FABRICATION DE SYSTÈME DE TRANSPORT

(30) Priorität: 13.09.2018 DE 102018122451
(43) Veröffentlichungstag der Anmeldung: 18.03.2020
(73) Patentinhaber: Wallroth F & E UG, 56337 Arzbach (DE)
(72) Erfinder: Knopp, Hans Werner, 56412 Großholbach (DE)
(74) Vertreter: Bernsmann, Falk

(56) Entgegenhaltungen:
- DE-A1- 2 928 403
- DE-A1-102013 205 997
- DE-U1-202012 103 271
- US-A- 207 626
- US-A- 3 368 663
- US-A- 3 941 238
- US-B1- 8 403 130

## Beschreibung

### Technisches Gebiet

Die Erfindung betrifft ein Transportsystem zum Transportieren von Gütern in einer Transportrichtung entlang einer Transportbandebene eines Transportbands gemäß dem Oberbegriff des Anspruchs 1.

Die Erfindung betrifft außerdem ein Verfahren zur Herstellung eines erfindungsgemäßen Transportsystems.

### Stand der Technik

Elastische Transportbänder sind aus dem Stand der Technik vielfältig bekannt, wobei diese Transportbänder in der Regel endlos ausgestaltet und somit umlaufend an einem Gestell angeordnet sind. Die Transportbänder werden dabei an Walzen von in dem Gestell gelagerten Umlenk- und/oder Antriebsvorrichtungen geführt und umgelenkt sowie gegebenenfalls mittels diesen angetrieben.

Damit ein Transportband, insbesondere quer zu seiner Transportrichtung, definiert an einer Walze geführt werden kann, sind solche Walzen oftmals ballig ausgeformt, wodurch sich der Effekt ergibt, dass das Transportband im Betrieb im Wesentlichen zentrisch an diesem balligen Bereich gehalten und geführt wird. Nachteilig bei derartig ballig ausgestalteten Walzen ist es, dass sich entlang der Seitenbereiche des Transportbands zwischen diesem und der balligen Walze Verschmutzungen anlagern können, welche den Führungseffekt stören können, sodass eine erforderliche Seitenführung des Transportbands nicht mehr ausreichend gewährleistet werden kann, wodurch im schlechtesten Fall das Transportband seitlich von der balligen Walze herunterlaufen und abspringen kann.

Die Druckschrift CN207107729U beschreibt beispielsweise eine bauchige Antriebswalze mit quer zur Transportrichtung ausgerichteten Stegen für ein Transportband, wobei die Stege ein Anhaften des Transportbandes an der Antriebswalze mit damit verbundener seitlicher Auslenkung des Transportbandes verhindern. Durch die Kombination der Stege mit der bauchigen Form der Antriebswalze wird verhindert, dass das Transportband von der Antriebswalze seitlich abrutscht.

Hinsichtlich einer anderen konstruktiven Lösung ist es bekannt, zueinander leicht angestellte Walzen vorzusehen, um ein Transportband in Transportrichtung gesehen beidseits an seinen Randbereichen stützen zu können, so dass ein seitliches Auswandern des Transportbands quer zur Transportrichtung unterbunden werden kann. Diese Lösung ist aufgrund der Vielzahl an erforderlichen Walzen jedoch recht aufwendig.

Hinsichtlich einer besonders einfachen Ausgestaltung eines ein Transportband umfassenden Transportsystems kann das Transportband beispielsweise lediglich einen Obertrum und einen Untertrum ausbilden, welche im Wesentlichen parallel zueinander geführt sind.

Die Druckschrift GB1039312A offenbart ein Transportsystem mit einem Endlosgurt. Dieser Gurt weist sich in Längsrichtung erstreckende Erhebungen auf. Der Gegenstand von GB1039312A umfasst weiter einen Roller zum Führen des Endlosgurtes, der parallele Rillen in Umfangsrichtung aufweist, welche in die Rillen des Gurtes greifen können. Als besondere Form sind im Wesentlichen u-förmige Rillen beschrieben.

Nachteilig dabei ist, dass derartige Gurte keinen optimalen Griff auf den Rollen aufweisen und aufgrund dessen Reibverluste auftreten können. Hinzu kommt, dass bei Temperaturverschiebung die Passgenauigkeit zwischen Rillen in dem Gurt und Erhebungen an den Rollen leiden kann. Bei der Montage und der Herstellung ist auf einen besonders passgenauen Sitz zu achten.

Die Druckschrift EP679522A1 beschreibt ein Transportbandelement zum Transportieren von Gütern mit einem elastisch biegbaren und flächig ausgestalteten Grundkörper, mit einer Aufnahmefläche zum Aufnehmen der Güter und mit einer Spurführungseinrichtung zum Führen des Transportbandelements an einer Auflagevorrichtung. Die Spurführungseinrichtung umfasst ein oder mehrere jeweils als Materialschwächung ausgebildete Rillenelemente, welche sich in Laufrichtung des Transportbandelements erstreckend in dem elastisch biegbaren Grundkörper angeordnet sind.

Die vorgenannten Transportbänder werden in der Regel durch eine kraftschlüssige Kraftübertragung von an den Transportbändern anliegenden Antriebswalzen angetrieben. Wenn schwere Güter transportiert werden sollen oder eine Bewegung des Transportbandes durch hohe Reibungsverluste, beispielsweise an Umlenk- oder Führungselementen, gehemmt ist, kann zwischen den Antriebswalzen und dem Transportband Schlupf auftreten, der zu einem erhöhten Verschleiß und einem unzuverlässigen Antrieb des Transportbandes führt. Dieses Problem tritt insbesondere bei Transportbändern auf, die durch in Rillen eingreifende Führungselemente geführt sind, da dabei besonders hohe Reibungsverluste auftreten.

Die Druckschrift US3980174A beschreibt ein elastisches Transportband mit Längsrillen, zwischen denen jeweils Stege mit M-förmigem Querschnitt angeordnet sind. Die Stege können in komplementär geformte Nuten einer Antriebswalze eingreifen, wobei die Stege gespreizt werden, was zu einem verbesserten Kraftschluss zum Antrieb des Transportbandes führt. Aufgrund der komplizierten Geometrie kann es jedoch leicht zu einem Verklemmen des Transportbandes kommen und die Herstellung des Transportbands und der Antriebswalze sind aufwändig. Die Druckschrift DE 20 2012 103271 U1 offenbart ein Transportsystem nach dem Oberbegriff des Anspruchs 1.

### Technische Aufgabe

Die Aufgabe der Erfindung ist es, ein kostengünstiges Transportsystem zu schaffen, in dem ein Transportband zuverlässig und verschleißarm angetrieben und geführt wird. Es ist ferner eine Aufgabe der Erfindung ein möglichst einfaches Herstellungsverfahren dafür zu schaffen.

### Technische Lösung

Der Gegenstand der vorliegenden Erfindung stellt ein Transportsystem gemäß Anspruch 1 bereit, das die technische Aufgabe löst. Ebenso wird die Aufgabe durch ein Herstellungsverfahren gemäß Anspruch 9 gelöst. Vorteilhafte Ausgestaltungen ergeben sich aus den abhängigen Ansprüchen.

### Beschreibung der Ausführungsarten

Ein erfindungsgemäßes elastisches Transportband ist für ein Transportsystem zum Transportieren von Gütern in einer Transportrichtung entlang einer Transportbandebene des Transportbands ausgelegt. Ein "Transportband" im Sinne der Erfindung ist ein bei seinen vorgesehenen Einsatzbedingungen elastischer, flächiger, beispielsweise im Wesentlichen quaderförmiger, Körper, dessen Ausdehnung in der Transportbandebene wesentlich größer ist als senkrecht dazu. Ein solches Transportband hat zwei Flächenseiten, von denen eine in der Regel zum Tragen der Güter dient, und jeweils zwei wesentlich kleinere Schmalseiten entlang der Transportrichtung und Stirnseiten quer zur Transportrichtung.

Die Stirnseiten sind in der Regel miteinander verbunden, beispielsweise verschweißt, sodass das Transportband "endlos" ist. In der Regel ist ein Transportband länglich geformt, wobei in der Transportebene eine Ausdehnung entlang der Transportrichtung wesentlich größer ist als eine Ausdehnung in einer Querrichtung quer dazu. Insbesondere wenn das Transportband in einem Transportsystem verwendet wird, kann es gebogen sein, sodass unterschiedliche Bereiche des Transportbands voneinander unterschiedliche Transportebenen und Transportrichtungen aufweisen können.

Der Begriff "entlang" wird im Sinne der Erfindung gleichbedeutend mit "im Wesentlichen Parallel", also beispielsweise einen Winkel von 0° bis 10°, insbesondere von 0° bis 5°, vorzugsweise von 0° bis 2°, einschließend, verwendet. Der Begriff "quer" wird im Sinne der Erfindung gleichbedeutend mit "im Wesentlichen senkrecht", also beispielsweise einen Winkel von 80° bis 90°, insbesondere 85° bis 90°, vorzugsweise 88° bis 90°, einschließend, verwendet.

Das Transportband umfasst an einer Tragseite des Transportbands zumindest eine entlang der Transportbandebene ausgerichtete Tragfläche zum Tragen der Güter. Die Tragseite ist eine Flächenseite des Transportbands. Im einfachsten Fall ist die Tragfläche dazu ausgelegt, dass die Güter darauf abgelegt werden können. Insbesondere kann die gesamte Tragseite die Tragfläche bilden, um eine möglichst große Fläche zum Tragen der Güter bereitzustellen.

Das Transportband umfasst an einer Führungsseite des Transportbands zumindest eine entlang der Transportbandebene ausgerichtete Führungsfläche zur Führung des Transportbands. Die Führungsseite ist eine Flächenseite des Transportbands, insbesondere die der Tragseite gegenüberliegende Flächenseite des Transportbandes.

Durch eine räumliche Trennung von Tragfläche und Führungsfläche können die beiden Flächen für unterschiedliche Anforderungen optimiert werden. Beispielsweise kann die Tragfläche für eine einfache Reinigung glatt ausgestaltet sein, während die Führungsfläche Antriebs- und Führungsnuten aufweist. Insbesondere kann die gesamte Führungsseite die Führungsfläche bilden, um eine möglichst große Fläche für eine möglichst präzise und zuverlässige Führung bereitzustellen.

Die Führungsfläche umfasst eine Mehrzahl von Nuten. Die Nuten umfassen eine Mehrzahl von, beispielsweise 2 bis 20, insbesondere 5 bis 15, Führungsnuten zum Eingriff zumindest eines Führungssteges zur Führung des Transportbands entlang der Transportrichtung, wobei eine Längsachse jeder der Führungsnuten entlang der Transportrichtung ausgerichtet ist.

Vorzugsweise erstreckt sich zumindest eine der Führungsnuten, insbesondere jede Führungsnut, über die gesamte Länge der Führungsfläche entlang der Transportrichtung, um eine möglichst zuverlässige Führung sicherzustellen und möglicherweise erhöhte Reibung und/oder erhöhten Verschleiß des Führungssteges und/oder des Transportbands an einem Ende der Führungsnut zu verhindern.

Durch eine Mehrzahl von zwei, drei, vier oder mehr Führungsnuten kann bei gegebener Nuttiefe eine größere Gesamtkontaktfläche mit den Führungsstegen und somit eine zuverlässigere Führung erreicht werden als durch eine einzelne Nut. Andererseits kann eine vorgegebene Führungsstärke mit einer geringeren Nuttiefe erreicht werden. Dadurch kann das Transportband dünner und somit materialsparender und biegsamer ausgelegt werden. Ein biegsameres Transportband hat den Vorteil, dass es in einem besonders platzsparenden Transportsystem mit kleineren Kurvenradien oder kleineren Umlenkwalzen oder Antriebswalzen eingesetzt werden kann.

Ein weiterer Vorteil, das Transportband statt an einem einzigen an mehreren insbesondere parallelen und in Querrichtung voneinander beabstandeten Führungsstegen zu führen ist, dass das Transportband bei ungleichmäßiger Belastung oder lateralem Zug weniger stark in der Transportbandebene verschert werden kann. Das erhöht die Transportsicherheit und führt zu weniger Materialverschleiß. Eine Verscherung ist besonders nachteilig bei über Antriebsnuten mit korrespondierenden Antriebsstegen getriebenen Transportbändern, die unter Verscherung zum Verkanten neigen. Erfindungsgemäß ist es wichtig, dass Transportbandmaterial elastisch auszugestalten, damit die aufgenommen Scherkräfte elastisch aufgenommen und wieder abgeführt werden können, ohne das Transportband zu beschädigen oder auszulenken.

Ferner lässt sich eine Führungsstärke durch eine Auswahl einer geeigneten Anzahl von Nuten besonders einfach auf die Anforderungen eines Transportsystems anpassen. Diese Anpassung ist insbesondere einfacher als eine Anpassung der Nuttiefe, die aufgrund der begrenzten Dicke des Transportbandes nur in engen Grenzen möglich ist, ohne die mechanische Stabilität des Transportbandes zu gefährden.

Außerdem kann das Transportband durch eine Mehrzahl von Führungsnuten in unterschiedlichen Bereichen eines Transportsystems unterschiedlich stark geführt werden, indem eine mehr oder weniger große Anzahl von Führungsstegen in die Führungsnuten eingreift. So kann beispielsweise in geraden oder gering gekrümmten Abschnitten des Transportsystems eine Führung durch wenige Führungsstege erfolgen, um Reibungsverluste zu minimieren, während in stark gekrümmten Abschnitten eine besonders zuverlässige Führung durch viele Führungsstege erfolgt.

Die Nuten umfassen eine Anzahl von Antriebsnuten zum Eingriff zumindest eines Antriebssteges zum Antrieb des Transportbands entlang der Transportrichtung, wobei eine Längsachse jeder der Antriebsnuten in einer Querrichtung quer zur Transportrichtung ausgerichtet ist.

Vorzugsweise erstreckt sich zumindest eine der Antriebsnuten, insbesondere jede Antriebsnut, über die gesamte Breite der Führungsfläche in Querrichtung, um einen möglichst zuverlässigen Antrieb sicherzustellen.

Die Antriebsstege können zum in Transportrichtung formschlüssigen statt kraftschlüssigen Antrieb des Transportbandes in eine zum zuverlässigen Antrieb hinreichende Anzahl von Antriebsnuten eingreifen, sodass kein Schlupf zwischen dem Transportband und einer Antriebswalze auftreten kann und der Antrieb besonders effizient, zuverlässig und verschleißarm erfolgt, auch wenn eine größere Anzahl von Führungsnuten und Antriebsnuten eine zunehmende mechanische Materialschwächung des Transportbandes bewirken. Durch den formschlüssigen Kontakt ist insbesondere auch bei Verschmutzungen, beispielsweise durch Öl, Fett oder Mehl ein zuverlässiger Antrieb möglich.

Ferner kann das Transportband mit einer geringeren Vorspannung, beispielsweise mit einer Dehnung des Transportbandes um 0,1 % bis 2 %, um eine Antriebswalze geführt werden als bei einem kraftschlüssigen Antrieb, wodurch die mechanische Belastung für das Transportband und für Lager der Antriebswalze sowie der damit verbundene Verschleiß reduziert werden. Deshalb kann ein erfindungsgemäßes Transportband mit höherer mechanischer Schwächung, wie mit einer größeren Anzahl von Nuten, im Vergleich zum Stand der Technik hinreichend sicher und stabil ausgelegt werden.

Die Kombination von Führungsnuten und Antriebsnuten hat den besonderen Vorteil, dass mit besonders einfachen Mitteln eine zuverlässige Führung und ein zuverlässiger Antrieb erreicht werden. Sowohl die Führung als auch der Antrieb werden durch eine einfach aufgebaute Antriebswalze, die der vorliegenden Erfindung entsprechend ausgestaltet ist, sichergestellt. Weiterhin können Führung und Antrieb sichergestellt werden, ohne in die Tragfläche des Transportbandes einzugreifen, sodass diese vollständig zum Gütertransport genutzt und einfach gereinigt werden kann.

Ein weiterer Vorteil der Kombination von mehreren Führungsnuten mit Antriebsnuten liegt darin, dass sich das Transportband durch die Führungsnuten weniger verschert, sodass die Antriebsnuten nicht mit zugehörigen Antriebsstegen verkanten können.

Die Führungsfläche kann zwei Randbereiche und einen in Querrichtung zwischen den Randbereichen angeordneten Zentralbereich umfasst, wobei die Führungsnuten in dem Zentralbereich angeordnet sind, und die Antriebsnuten in den Randbereichen und bevorzugt auch in dem Zentralbereich angeordnet sind, wobei bevorzugt keine Führungsnuten in den Randbereichen angeordnet sind.

Eine Anordnung der Führungsnuten im Zentralbereich hat den Vorteil, dass hier eine geringere Gefahr besteht, dass sich bei einer Verscherung des Transportbandes in der Transportbandebene, beispielsweise in einer Kurve, ein Führungssteg in einer Führungsnut verkantet, als bei einer Anordnung der Führungsnuten in einem Randbereich. Dieser Effekt ist umso stärker, je größer die Anzahl der Führungsnuten ist.

Eine Anordnung der Antriebsnuten in den Randbereichen hat den Vorteil, dass der Antrieb zuverlässiger, insbesondere ohne Verscherung des Transportbandes in der Transportbandebene, erfolgt als bei einer Anordnung der Antriebsnuten nur im Zentralbereich. Das gilt insbesondere bei einer großen Breite des Transportbands in Querrichtung, beispielsweise von 70 cm. Für eine besonders einfache Herstellung können die Antriebsnuten sowohl in den Randbereichen als auch im Zentralbereich, insbesondere über eine gesamte Breite des Transportbandes in Querrichtung angeordnet sein.

Beispielsweise wenn sowohl Führungsnuten als auch Antriebsnuten im Zentralbereich angeordnet sind, können die Führungsnuten die Antriebsnuten kreuzen.

Vorteilhafterweise ist das Transportband mit einem Krümmungsradius senkrecht zur Transportebene von 15 mm, bevorzugt 10 mm, besonders bevorzugt 6,5 mm, elastisch biegbar. Die Biegsamkeit kann durch die Transportbanddicke senkrecht zur Transportbandebene und/oder über die Elastizität eines Transportbandmaterials eingestellt werden. Ferner wird die Biegsamkeit durch die Antriebsnuten erhöht.

Eine hohe Biegsamkeit, also ein kleiner Krümmungsradius, hat den Vorteil, dass das Transportband um kleine Umlenktrommeln und Antriebstrommeln geführt werden kann, woraus sich ein besonders platzsparender Aufbau eines Transportsystems ergibt.

Eine Transportbanddicke des Transportbandes senkrecht zur Transportebene beträgt vorzugsweise von 1 mm bis 5 mm, insbesondere von 2 mm bis 3 mm. Durch eine Vielzahl von Führungsnuten und Antriebsnuten können auch bei geringer Transportbanddicke, also auch geringer Nuttiefe, eine zuverlässige Führung und ein zuverlässiger Antrieb erreicht werden. Ein dünnes Transportband hat die Vorteile eines geringen Materialaufwands zur Herstellung, einer geringen Masse und einer hohen Biegsamkeit senkrecht zur Transportbandebene.

Das Transportband hat vorteilhafterweise eine Härte von 50 bis 100 Shore-A, insbesondere von 65 bis 95 Shore-A. Dieser Härtebereich hat sich in praktischen Anwendungen als besonders vorteilhaft erwiesen, um sowohl den Verschleiß des Transportbands als auch von mit dem Transportband in Kontakt kommenden Komponenten, beispielsweise einer Antriebswalze, eines Transportsystems zu minimieren.

Das Transportband kann zumindest eine die Nuten enthaltende Führungsschicht, zumindest eine die Tragfläche bildende Tragschicht und bevorzugt zumindest eine Verstärkungsschicht zur mechanischen Verstärkung des Transportbandes umfassen. Durch einen mehrschichtigen Aufbau können die Materialeigenschaften der einzelnen Schichten für unterschiedliche Anforderungen optimiert werden.

So kann beispielsweise die Führungsschicht aus einem Material bestehen, in das sich die Nuten einfach einbringen lassen und/oder das einen geringen Reibungskoeffizienten und/oder einen geringen Verschleiß gegenüber den Führungsstegen und/oder Antriebsstegen aufweist. Weiterhin kann die Führungsschicht aus einem Material bestehen, dass sich leicht elastisch verformen lässt, sodass von den Führungsstegen und/oder Antriebsstegen auf die Führungsschicht ausgeübte Kräfte von der Führungsschicht aufgenommen werden können, ohne die Führungsschicht, die Führungsstege und/oder die Antriebsstege zu beschädigen.

Die Tragschicht kann beispielsweise aus einem Material bestehen, das sich leicht reinigen und/oder desinfizieren lässt und/oder eine hohe Tragfähigkeit des Transportbands ermöglicht.

Beispielsweise zwischen der Führungsschicht und der Tragschicht kann eine Verstärkungsschicht angeordnet sein, die beispielsweise aus einem Material mit hoher Steifigkeit und/oder Festigkeit bestehen kann, um eine hohe Tragfähigkeit sicherzustellen und plastische Verformungen des Transportbands, die es unbrauchbar machen können, zu verhindern.

Die Schichten sind vorzugsweise entlang der Transportebene angeordnet und/oder fest, insbesondere stoffschlüssig, miteinander verbunden, beispielsweise miteinander verklebt und/oder verschweißt.

Für eine besonders einfache Herstellbarkeit kann eine Bodenfläche einer Nut von einer im Bereich der Nut freigelegten Grenzfläche zwischen der Führungsschicht und der Verstärkungsschicht oder der Tragschicht gebildet sein. In diesem Fall kann das Transportband beispielsweise durch Einbringen der zumindest einen Nut als durchgehender Spalt in der Führungsschicht vor oder nach einem Verbinden der Führungsschicht mit der Verstärkungsschicht oder der Tragschicht hergestellt werden.

Das Transportband kann zumindest einen bei den vorgesehenen Einsatzbedingungen des Transportbandes elastischen Kunststoff, beispielsweise ein Polyurethan, bevorzugt einen verstärkten, besonders bevorzugt faserverstärkten, Kunststoff, umfassen oder daraus bestehen. Insbesondere können die Schichten des Transportbands unterschiedliche Kunststoffe umfassen oder daraus bestehen. Beispielsweise kann die Verstärkungsschicht einen faserverstärkten Kunststoff umfassen.

Besonders bevorzugt ist es, dass das Transportband eine homogene Materialzusammensetzung, also keine Schichten aus unterschiedlichen Materialien, aufweist. Dadurch werden mögliche Verbindungsprobleme an Grenzflächen zwischen unterschiedlichen Materialien ausgeschlossen, und das Transportband ist besonders einfach herstellbar. Das Transportband kann beispielsweise monolithisch aus genau einem Kunststoff, insbesondere einem Polyurethan, bestehen.

Die Führungsschicht des Transportbands kann ein gegenüber der oder den anderen Schichten des Transportbands, beispielsweise durch eine thermische Behandlung und/oder eine Druckbehandlung, verdichtetes Material umfassen. Dadurch wird eine thermische und/oder mechanische Widerstandsfähigkeit der Führungsschicht erhöht, sodass die Führungsfläche, insbesondere eine Oberflächenstruktur der Führungsfläche, bei einem Einbringen einer Nut und/oder bei einem Glätten der Bodenfläche, der linken Flankenfläche und/oder der rechten Flankenfläche einer Nut nicht beschädigt wird.

Die Tragfläche ist vorzugsweise ohne Nuten, insbesondere glatt oder mikrostrukturiert, beispielsweise mit abgerundeten Strukturkanten, ausgestaltet. Dadurch ist die Tragfläche leicht zu reinigen, sodass das Transportband auch in hygienisch sensiblen Bereichen, beispielsweise in der Lebensmittelproduktion eingesetzt werden kann.

Die Nuten können beispielsweise mit einem v-förmigen, u-förmigen, rechteckigen oder halbkreisförmigen Querschnitt quer zu ihrer Längsachse ausgestaltet sein. Ein v-förmiger, u-förmiger oder halbkreisförmiger Querschnitt hat den Vorteil, dass ein Steg darin besonders einfach eingeführt werden kann, ohne zu verkanten. Insbesondere kommt es beim Einführen zu einer selbsttätigen Zentrierung zwischen Nut und Steg.

Zumindest eine Nut umfasst vorzugsweise zumindest eine Bodenfläche zur Begrenzung einer Eindringtiefe des in die Nut eingreifenden Steges in das Transportband. Durch die Bodenfläche wird ein definierter Anschlag für den Steg, insbesondere für einen Steg mit beliebig geformtem Ende, bereitgestellt, sodass das Transportband in einem definierten Abstand von dem Steg präzise und zuverlässig geführt wird.

Ferner ergibt sich, beispielsweise im Vergleich zu einer v-Form, eine vergrößerte Kontaktfläche zwischen dem Steg und der Nut, sodass eine lokale mechanische Belastung von Steg und Transportband reduziert wird. Dadurch kann beispielsweise ein weniger verschleißbeständiges Material für den Steg oder das Transportband verwendet werden. Das Material kann so beispielsweise zur Kosten- oder Gewichtsreduzierung gewählt werden.

Außerdem ist es bei einer Nut mit einer Bodenfläche, beispielsweise im Vergleich zu einer v-Förmigen Nut, weniger wahrscheinlich, dass sich Fremdkörper in der Nut festsetzen oder dass der Steg in der Nut verkantet, was beides den Verschleiß erhöhen würde.

Des Weiteren ist eine Nut mit Bodenfläche bei gleicher Öffnungsbreite und gleichem Flankenwinkel weniger tief als eine v-förmige Nut. Das Transportband wird durch eine Nut mit Bodenfläche somit mechanisch weniger geschwächt und hat eine höhere Lebensdauer und/oder mechanische Belastbarkeit.

Die zumindest eine Nut umfasst vorzugsweise zumindest eine schräg zur Transportbandebene angeordnete und die Führungsfläche mit der Bodenfläche verbindende linke Flankenfläche zur linken Seitenführung Steges und/oder zumindest eine schräg zur Transportbandebene angeordnete und die Führungsfläche mit der Bodenfläche verbindende rechte Flankenfläche zur rechten Seitenführung des Steges. Dabei ist eine Bodenbreite der Bodenfläche senkrecht zur Längsrichtung der Nut kleiner als eine Öffnungsbreite der Nut senkrecht zur Längsrichtung und in einer Ebene mit der Führungsfläche. Die Nut erweitert sich also von der Bodenfläche zur Führungsfläche.

Die Öffnungsbreite kann beispielsweise für praktische Anwendungen vorteilhafterweise 110 % bis 200 %, insbesondere 130 % bis 180 %, der Bodenbreite betragen, wobei die Bodenbreite beispielsweise 2 mm bis 8 mm, insbesondere 3 mm bis 4 mm betragen kann.

Vorzugsweise sind die linke Flankenfläche und die rechte Flankenfläche symmetrisch zu einer die Längsachse der Nut enthaltenen und senkrecht zur Führungsfläche ausgerichteten Mittelebene der Nut angeordnet, wodurch ein Steg in der Nut eine gleichmäßige linke und rechte Seitenführung erfährt. Weiterhin ist eine Nut mit symmetrischen Flankenflächen besonders einfach herstellbar, und bei der Montage eines entsprechenden Transportbands muss nicht auf eine korrekte Ausrichtung einer rechten und linken Seite der Nut geachtet werden.

Durch eine sich zur Führungsfläche erweiternde Nut wird die Nut und damit das Transportband bei einem Eingreifen des Steges lateral zur Längsrichtung der Nut automatisch an dem Steg ausgerichtet. Das heißt, auch bei Abweichungen der Breite oder Lateralposition des Steges von der Breite oder Lateralposition der Bodenfläche der Nut, beispielsweise durch Dehnung oder Stauchung des Transportbands, durch Fertigungstoleranzen oder durch Verschleiß, kann der Steg zur zuverlässigen Führung des Transportbands in die Nut eingreifen.

Eine sich zur Führungsfläche erweiternde Nut hat den weiteren Vorteil, dass zwischen dem Steg und dem Transportband lateral zur Längsrichtung der Nut ein Zwischenraum verbleiben kann, sodass der Steg auch bei einer lateralen Stauchung des Transportbands nicht in der Nut eingeklemmt wird.

Vorzugsweise hat die Bodenfläche, die linke Flankenfläche und/oder die rechte Flankenfläche, insbesondere jede der genannten Flächen, eine geringere Rauheit als die Führungsfläche. Der Begriff Rauheit bezeichnet insbesondere eine Gestaltabweichung dritter bis fünfter Ordnung bei technischen Oberflächen gemäß der Norm DIN 4760. Die Rauheit kann beispielsweise als Mittenrauwert Rₐ, der dem quadratischen Mittel der Abweichung der Messpunkte auf der Oberfläche zur Mittellinie der Oberfläche entspricht, oder als quadratische Rauheit R_{q}, die dem quadratischen Mittel der Abweichung der Messpunkte von der Mittellinie entspricht, oder als flächenbezogener Rauheitswert Sₐ gemäß der Norm EN ISO 25178 ausgedrückt sein.

Typischerweise hat eine Führungsfläche eines fachüblichen Transportbands eine strukturierte Oberfläche und dadurch eine hohe Rauheit, um zu verhindern, dass die Führungsfläche an einer Umlenkrolle oder einer Antriebsrolle des Transportsystems anhaftet. Insbesondere in der zumindest einen Nut kann eine strukturiere Oberfläche jedoch eine Ablagerung von Fremdkörpern und eine Ansiedlung von Mikroorganismen fördern und eine hygienische Reinigung des Transportbandes erschweren, was insbesondere für eine Verwendung des Transportbandes in der Lebensmittelverarbeitung problematisch ist.

Eine gegenüber der Führungsfläche verringerte Rauheit in der zumindest einen Nut führt daher zu einer verbesserten Reinhaltung und leichteren hygienischen Reinigung des Transportbandes. Versuche haben ergeben, dass es für typische Transportbänder besonders vorteilhaft ist, wenn die Rauheit der Bodenfläche, der linken Flankenfläche und/oder der rechten Flankenfläche beispielsweise 0,5 % bis 50 %, insbesondere 1 % bis 10 %, der entsprechenden Rauheit der Führungsfläche beträgt.

Vorzugsweise ist die Bodenfläche entlang der Transportbandebene ausgerichtet. Dadurch ist die Eindringtiefe des Steges in die Nut über die gesamte Bodenfläche gleich, sodass eine besonders zuverlässige Führung ermöglicht wird.

Die linke Flankenfläche kann in einem linken Übergangsbereich, und die rechte Flankenfläche kann in einem rechten Übergangsbereich in die Bodenfläche übergehen, wobei der linke Übergangsbereich und/oder der rechte Übergangsbereich als Kante ausgebildet sein kann. Eine Kante bietet den Vorteil, dass Sie im Gegensatz zu einem abgerundeten Übergang eine laterale Bewegung des Steges entlang der Transportebene senkrecht zur Längsrichtung der Nut aus der Nut heraus hemmt. Dadurch wird insbesondere bei lateraler Belastung, beispielsweise wenn das Transportband um eine Kurve geführt wird, eine besonders zuverlässige Führung erreicht.

Wenn die Flankenflächen jeweils an einer Kante in die Bodenfläche übergehen, können beispielsweise die Bodenfläche und die Flankenflächen plan und somit einfach und kostengünstig herstellbar sein. Sind Bodenfläche und Kantenflächen plan ergibt sich daraus eine Nut mit einer trapezförmigen Querschnittsfläche senkrecht zur Längsrichtung der Nut.

Vorzugsweise sind die Bodenfläche, die linke Flankenfläche und/oder die rechte Flankenfläche, insbesondere zumindest die beiden Flankenflächen, plan, also nicht gewölbt, sodass sie, insbesondere mit subtraktiven Verfahren, beispielsweise durch Fräsen, einfach und kostengünstig hergestellt werden können. Ferner bilden plane Flächen mit üblichen Stegen mit rechteckigem Querschnitt besonders große Kontaktflächen, was die Führung verbessert und die lokale Materialbelastung reduziert.

Beispielsweise zur Anpassung an einen abgerundeten Steg, können die Bodenfläche, die linke Flankenfläche und/oder die rechte Flankenfläche gewölbt, vorzugsweise um die Längsachse zur Nut hin konkav gewölbt, sein. Vorzugsweise ist zumindest die Bodenfläche um die Längsachse zur Nut hin konkav gewölbt.

In einer besonders vorteilhaften Ausgestaltung sind die Flankenflächen plan und die Bodenfläche ist um die Längsachse zur Nut hin konkav gewölbt. Eine solche Form der Nut lässt sich, beispielsweise durch schleifen oder fräsen besonders einfach herstellen. Außerdem ist es so möglich, dass die Flankenflächen ohne Kanten, an denen es zu einer Ansammlung von Fremdkörpern oder einer erhöhten Materialbelastung kommen könnte, in die Bodenfläche übergehen.

In einer Ausgestaltung der Übergangsbereiche wird ferner vorgeschlagen, dass der linke Übergangsbereich und der rechte Übergangsbereich abgerundet, also ohne Kanten, ausgebildet sind. Durch den Verzicht auf Kanten in der zumindest einen Nut wird eine mögliche Ansammlung von Fremdkörpern oder eine erhöhte Materialbelastung im Kantenbereich vermieden.

Um die Bodenfläche mit der Führungsfläche zu verbinden, müssen die Flankenflächen und/oder die Bodenfläche in der Ausgestaltung ohne Kanten in der Nut gewölbt sein. Vorzugsweise ist nur die Bodenfläche gewölbt, um die Nut besonders einfach herstellen zu können.

Alternativ ist auch denkbar, dass nur die Flankenflächen gewölbt sind, und die Bodenfläche plan ist, um die oben genannten Vorteile einer planen Bodenfläche zu ermöglichen. Zur Längsachse der Nut hin konkav gewölbte Flankenflächen haben außerdem den Vorteil, dass eine Steigung der Flankenflächen von der Bodenfläche zur Führungsfläche hin zunimmt. Durch die nach außen zunehmende Steigung der Flankenflächen ist die von einem Führungssteg auf das Transportband ausgeübte Führungskraft quer zur Transportrichtung umso höher, je weiter das Transportband aus seiner vorgesehenen Position relativ zu dem Führungssteg ausgelenkt wird. Somit wird durch die geringe Steigung in der Nähe der Bodenfläche eine geringe Reibung und ein geringer Verschleiß sichergestellt, solange das Transportband an seiner vorgesehenen Position läuft. Andererseits wird durch die hohe Steigung am Rand der Nut nahe der Führungsfläche eine starke und zuverlässige Führung sichergestellt, wenn das Transportband aus seiner vorgesehenen Position auszubrechen droht.

Insbesondere können in der Ausgestaltung ohne Kanten in der Nut die Flankenflächen und die Bodenfläche gewölbt sein, sodass sich beispielsweise eine Nut mit einem Querschnitt senkrecht zur Längsrichtung der Nut in Form eines Kreissektors, beispielsweise eines Halbkreises ergibt. Ein Querschnitt in Form eines Kreissektors bietet den Vorteil einer besonders gleichmäßigen Verteilung mechanischer Belastungen und somit eines geringen Verschleißes.

Die linke Flankenfläche schließt mit der rechten Flankenfläche vorzugsweise einen Flankenwinkel ein, wobei der Flankenwinkel von 30° bis 60°, bevorzugt von 35° bis 55°, insbesondere 40°, beträgt. Einerseits erlaubt ein kleiner Flankenwinkel, also eine hohe Steigung der Flankenflächen von der Bodenfläche zur Führungsfläche, eine besonders zuverlässige Seitenführung des Steges in der Nut und verringert die Gefahr, dass der Steg bei einer Stauchung des Transportbands aus der Nut herausgedrückt wird.

Andererseits kommen die oben beschriebenen Vorteile einer sich zur Führungsfläche erweiternden Nut besonders bei einem großen Flankenwinkel, also einer geringen Steigung der Flankenflächen von der Bodenfläche zur Führungsfläche, zum Tragen. Für praktische Anwendungen hat sich zwischen diesen gegensätzlichen Anforderungen ein Flankenwinkel von 30° bis 60°, bevorzugt von 35° bis 55°, insbesondere 40°, als besonders vorteilhaft erwiesen.

Eine erfindungsgemäße Antriebswalze ist zum Antrieb eines an einer Mantelfläche der Antriebswalze anliegenden, erfindungsgemäßen elastischen Transportbandes durch eine Rotation der Antriebswalze um eine Rotationsachse ausgelegt, wobei die Mantelfläche eine Mehrzahl von Stegen umfasst.

Die Antriebswalze ist beispielsweise im Wesentlichen zylinderförmig mit der Rotationsachse als Mittellängsachse ausgestaltet.

Die Stege umfassen eine Anzahl von Antriebsstegen zum Eingriff in die Antriebsnuten des Transportbandes zum Antrieb des Transportbands entlang der Transportrichtung, wobei eine Längsachse jedes der Antriebsstege entlang der Rotationsachse ausgerichtet ist.

Die Stege umfassen eine Mehrzahl von Führungsstegen zum Eingriff in die Führungsnuten des Transportbandes zur Führung des Transportbands entlang der Transportrichtung, wobei jeder der Führungsstege in Umfangsrichtung der Antriebswalze um die Rotationsachse umläuft.

Durch die Führungsstege und Antriebsstege kann die Antriebswalze das Transportband effizient und zuverlässig führen und antreiben.

Die Stege können eine zu den zugehörigen Nuten komplementäre Form aufweisen, um einen besonders großflächigen Kontakt und eine hohe Kraftübertragung zwischen den Nuten und Stegen zu ermöglichen.

Die Stege können beispielsweise eine rechteckige, trapezförmige, v-förmige, u-förmige oder halbkreisförmige Querschnittsfläche senkrecht zu ihrer Längsachse aufweisen.

Die Stege können durchgängig oder, beispielsweise zur Materialersparnis oder zur Reibungsreduktion, unterbrochen ausgebildet sein.

Die Mantelfläche kann zwei Randbereiche und einen entlang der Rotationsachse zwischen den Randbereichen angeordneten Zentralbereich umfassen, wobei die Führungsstege, bevorzugt ausschließlich, in dem Zentralbereich und die Antriebsstege, bevorzugt ausschließlich, in den Randbereichen angeordnet sind.

Durch die genannten Anordnungen der Stege in den Randbereichen und dem Zentralbereich können die Stege mit entsprechend in den Randbereichen und im Zentralbereich der Führungsfläche des Transportbandes angeordneten Nuten vorteilhaft zusammenwirken.

Ein senkrecht zur Rotationsachse gemessener Durchmesser der Antriebswalze beträgt vorzugsweise 15 mm bis 45 mm, insbesondere 25 mm bis 35 mm. Ein Durchmesser im genannten Wertebereich erlaubt gleichzeitig einen zuverlässigen Antrieb des Transportbandes, da eine ausreichend hohe Anzahl von Antriebsstegen Platz findet, und eine kompakte Bauweise eines Transportsystems.

Im Fall eines dünnen Transportbandes mit entsprechend geringer Nuttiefe und Steghöhe kann auch auf einer Antriebswalze mit kleinem Durchmesser eine ausreichend hohe Anzahl von Antriebsstegen für einen zuverlässigen Antrieb des Transportbandes angeordnet werden.

Ein erfindungsgemäßes Transportsystem ist zum Transportieren von Gütern in einer Transportrichtung entlang einer Transportbandebene eines erfindungsgemäßen Transportbands ausgelegt.

Das erfindungsgemäße Transportsystem umfasst zumindest eine erfindungsgemäße Antriebswalze zum Antrieb des Transportbandes. Das Transportsystem kann weitere Antriebswalzen umfassen, die ebenfalls erfindungsgemäß ausgestaltet sein können.

Insbesondere kann das Antriebssystem mehrere, beispielsweise bezüglich der Anzahl von Führungsstegen und/oder Antriebsstegen, unterschiedlich ausgestaltete erfindungsgemäße Antriebswalzen umfassen. Das Transportsystem kann beispielsweise zumindest eine Antriebswalze, die Antriebsstege aber keine Führungsstege aufweist, und/oder zumindest eine Führungswalze, die Führungsstege aber keine Antriebsstege aufweist, umfassen.

Dadurch können mit einem einheitlichen Transportband unterschiedliche Anforderungen an den Antrieb und/oder die Führung des Transportbandes in unterschiedlichen Bereichen des Transportsystems erfüllt werden. Insbesondere können auch über eine Lebensdauer des Transportsystems wechselnde Anforderungen durch einen Austausch von Antriebswalzen und/oder Führungswalzen erfüllt werden, ohne das Transportband auszutauschen.

Das Transportband umfasst eine Mehrzahl von Führungsnuten, beispielsweise 2 bis 20 Führungsnuten, insbesondere 5 bis 15 Führungsnuten, wobei das Transportsystem zu jeder Führungsnut zumindest einen Führungssteg umfasst, der zur Führung des Transportbands entlang der Transportrichtung in die jeweilige Führungsnut eingreift. Durch eine Mehrzahl von Führungsnuten kann eine zuverlässige Seitenführung des Transportbandes mit einer geringeren Materialbelastung und/oder einer geringeren Nuttiefe erreicht werden als mit einer einzelnen Führungsnut, sodass sich die Lebensdauer des Transportbandes und der Führungsstege erhöht. Allerdings müssen die Führungsnuten für ein klemmfreies und reibungsarmes Zusammenwirken mit den zugehörigen Führungsstegen exakt an den Führungsstegen ausgerichtet sein, sodass das Transportband und die Führungsstegen präzise gefertigt und in dem Transportsystem angeordnet sein müssen. Weiterhin kann eine in einem Montagezustand exakte Ausrichtung auch beim Betrieb des Transportsystems verloren gehen, wenn sich das Transportband beispielsweise durch eine von den transportierten Gütern oder von einem Antrieb des Transportbandes verursachte mechanische Belastung verformt.

Zumindest eine Führungsnut des Transportbandes und der darin eingreifende Führungssteg der Antriebswalze sind so ausgestaltet, dass ohne Querbelastung des Transportbandes in Querrichtung ein mechanisches Querspiel in Querrichtung zwischen der Führungsnut und dem Führungssteg besteht. Insbesondere können mehrere, beispielsweise alle, Führungsstege und Führungsnuten so ausgestaltet sein. Durch das Querspiel entstehen zwischen dem Führungssteg und der Führungsnut ohne Querbelastung, wenn also keine Führung notwendig ist, keine Reibungsverluste, sodass das Transportsystem besonders effizient arbeitet. Außerdem erleichtert das Querspiel, insbesondere bei einer Mehrzahl von Führungsnuten, eine korrekte Ausrichtung der Führungsnuten relativ zu den zugehörigen Führungsstegen und verhindert ein Einklemmen der Führungsstege in den Führungsnuten.

Das Querspiel ist vorteilhafterweise so ausgelegt, dass der Führungssteg mit der Führungsnut in Kontakt kommt, sobald eine so große Querbelastung auftritt, dass eine Führung des Transportbandes notwendig ist, um einen zuverlässigen Betrieb des Transportsystems zu gewährleisten.

Das Querspiel kann beispielsweise durch die relative Position in Querrichtung, die relative Breite, die Querschnittsform und/oder den Abstand senkrecht zur Transportbandebene von Führungsnut und Führungssteg eingestellt werden.

Zumindest ein Steg ist vorzugsweise in einem Montagezustand des Transportbandes von der linken Flankenfläche, der Bodenfläche und/oder der rechten Flankenfläche, insbesondere von beiden Flankenflächen und der Bodenfläche, der zugehörigen Nut beabstandet. Unter Montagezustand wird erfindungsgemäß ein Zustand verstanden, in dem das Transportband in dem Transportsystem montiert, aber nicht durch transportierte Güter oder einen Antrieb des Transportbandes mechanisch belastet ist.

Durch die Beabstandung wird sichergestellt, dass die Nut auch bei einer nicht exakten Positionierung der Nut relativ zu dem Steg, insbesondere bei einer Mehrzahl von Nuten und/oder bei einer Verformung des Transportbandes unter Last, klemmfrei und reibungsarm mit dem Steg zusammenwirken kann. Weiterhin wird verhindert, dass der Steg in das Transportband einschneidet.

Für praktische Anwendungen hat sich beispielsweise ein Abstand zwischen dem Steg und zumindest einer der Flankenflächen, insbesondere zu beiden Flankenflächen, von (jeweils) 5 % bis 50 %, insbesondere 10 % bis 30 %, der Öffnungsbreite der Nut als besonders vorteilhaft erwiesen. Ferner hat sich ein Abstand zwischen dem Steg und der Bodenfläche von 5 % bis 50 %, insbesondere 10 % bis 30 %, der Nuttiefe der Nut als besonders vorteilhaft erwiesen.

Zumindest ein Steg verjüngt sich vorzugsweise auf des Transportband zu mit einem Öffnungswinkel, wobei der Öffnungswinkel bevorzugt kleiner als ein Flankenwinkel der zugehörigen Nut ist und/oder von 25° bis 50°, besonders bevorzugt von 35° bis 40°, beträgt. Wenn der Öffnungswinkel kleiner als der Flankenwinkel ist, beispielsweise 80 % bis 99 %, insbesondere 90 % bis 95 %, des Flankenwinkels beträgt, kann der Steg besonders einfach in die Nut eingeführt werden und verklemmt dort, insbesondere bei einer Verformung des Transportbandes, nicht.

Der Steg kann sich beispielsweise v-förmig, insbesondere mit einer abgestumpften Spitze, verjüngen. Eine v-förmige Spitze ist besonders einfach in die Führungsnut einführbar. Eine abgestumpfte Spitze verringert vorteilhafterweise die Gefahr eines Einschneidens des Stegs in das Transportband.

Die angegebenen Maße der Nuten des Transportbandes beziehen sich auf einen in einem Transportsystem verbauten Zustand des Transportbandes. Im verbauten Zustand steht das Transportband in der Regel entlang der Transportrichtung unter Zugspannung, sodass es gegenüber einem unbelasteten Zustand in Längsrichtung beispielsweise um 0,1 % bis 2 % gedehnt ist.

Eine Mehrzahl der Führungsnuten und der darin eingreifenden Führungsstege ist so ausgestaltet, dass ohne Querbelastung des Transportbandes ein jeweils unterschiedlich großes Querspiel zwischen den Führungsnuten und den zugehörigen Führungsstegen besteht.

Dadurch kommt bei zunehmender Querbelastung nach und nach eine zunehmende Anzahl von Führungsstegen in Kontakt mit den zugehörigen Führungsnuten, sodass die Gesamtkontaktfläche der Führungsstege mit den Führungsnuten und die damit verbundene Stärke der Führung nach und nach ansteigt. So wird auch bei wechselnder Querbelastung immer eine ausreichend starke Führung bei gleichzeitig möglichst geringen Reibungsverlusten erreicht. Eine automatische dynamische Anpassung der Führungsstärke lässt sich nur mit einer Mehrzahl von Führungsnuten auf so einfache Weise realisieren.

Vorzugsweise ist die Öffnungsbreite zumindest einer Nut größer als eine zu der Öffnungsbreite parallele Breite des in die Nut eingreifenden Steges. Dadurch kann der Steg einfach, zuverlässig und ohne einzuklemmen in die Nut eingreifen; insbesondere auch dann, wenn der Steg, beispielsweise durch Fertigungstoleranzen oder Verformungen des Transportbands, nicht exakt an der Nut positioniert ist, oder wenn die Öffnungsbreite durch eine Stauchung des Transportbands verringert wird. Die Öffnungsbreite kann beispielsweise 110 % bis 200 %, insbesondere 130 % bis 180 % der Breite des Steges betragen.

Vorzugsweise beträgt die Bodenbreite zumindest einer Nut 100 % bis 150 %, bevorzugt 110 % bis 130 %, einer zu der Bodenbreite parallelen Breite des in die Nut eingreifenden Steges. Wie bei der Öffnungsbreite stellt auch eine ausreichend große Bodenbreite ein einfaches, zuverlässiges und klemmfreies Eingreifen des Steges in die Nut sicher. Zusätzlich sollte die Bodenbreite auch nicht zu groß sein, damit eine zuverlässige Wechselwirkung zwischen Nut und Steg gewährleistet wird. Für praktische Anwendungen haben sich daher die genannten Wertebereiche als besonders vorteilhaft herausgestellt, wobei die Bodenbreite beispielsweise 2 mm bis 8 mm, insbesondere 3 mm bis 4 mm betragen kann.

Ein erfindungsgemäßes Verfahren ist zur Herstellung eines erfindungsgemäßen Transportsystems ausgelegt und umfasst die folgenden Schritte, in der genannten Reihenfolge:
a) Bereitstellen eines Walzenrohlings mit einer um eine Rotationsachse rotationssymmetrischen Mantelfläche mit zwei Randbereiche und einem entlang der Rotationsachse zwischen den Randbereichen angeordneten Zentralbereich, und
b) Längsabtragen von Material von der Mantelfläche zur Erzeugung von entlang der Rotationsachse verlaufenden Längsrillen in der Mantelfläche mit dazwischenliegenden Antriebsstegen zumindest in den Randbereichen, und
c) Querabtragen von Material von der Mantelfläche zur Erzeugung von in Umfangsrichtung des Walzenrohlings um die Rotationsachse umlaufenden Querrillen in der Mantelfläche mit dazwischenliegenden Führungsstegen zumindest in dem Zentralbereich.

Der Walzenrohling kann beispielsweise zylindrisch geformt sein, wobei eine Mittellängsachse des Walzenrohlings mit der Rotationsachse zusammenfällt. Das Längsabtragen kann beispielsweise ein Fräsen umfassen. Das Querabtragen kann beispielsweise ein Drehen umfassen.

Mit einem erfindungsgemäßen Verfahren lässt sich eine erfindungsgemäße Antriebswalze besonders einfach herstellen, insbesondere wenn die Schritte in der genannten Reihenfolge ausgeführt werden. Denn so kann das Längsabtragen beispielsweise von beiden Enden des Walzenrohlings her bis zu einer nur ungefähr festgelegten Grenze zwischen den Randbereichen und dem Zentralbereich erfolgen. Genau festgelegt wird die Grenze dann erst im nächsten Schritt durch das Querabtragen, wobei die äußersten Querrillen die Grenze zwischen den Randbereichen und dem Zentralbereich definieren.

Eventuell bis in den Zentralbereich abgetragene Längsrillen werden von den Querrillen überlagert und stellen somit kein Problem für eine zuverlässige Führung dar. Durch eine Überlagerung von Längsrillen und Querrillen entstehen zwischen den jeweiligen Rillen unterbrochene Stege, mit denen eine ähnlich gute Führung und ein ähnlich zuverlässiger Antrieb möglich ist wie mit durchgängigen Stegen.

Insbesondere kann das Längsabtragen sowohl in den Randbereichen als auch in dem Zentralbereich erfolgt, wobei das Längsabtragen bevorzugt über eine gesamte Länge des Walzenrohlings entlang der Rotationsachse erfolgt. Dadurch können die Längsrillen in einem einzigen Schritt in beiden Randbereichen erzeugt werden, sodass das Verfahren besonders einfach und schnell durchgeführt wird.

Das Querabtragen erzeugt vorzugsweise vollständig um die Rotationsachse umlaufende Querrillen. Dadurch ist eine zuverlässige Führung unabhängig von einer Position der Antriebswalze bezüglich einer Rotation um die Rotationsachse möglich.

Das erfindungsgemäße Verfahren umfasst zudem ein Bereitstellen eines Rohlings für das Transportband des Transportsystems mit zumindest einer entlang einer Transportbandebene des Transportbands ausgerichteten Führungsfläche zur Führung des Transportbands an der Führungsseite des Transportbandes. Bei dem Rohling kann es sich insbesondere um ein fachübliches Transportband handeln.

Das Verfahren umfasst zudem, nach dem Bereitstellen, ein Einbringen einer Anzahl von Nuten, umfassend die Führungsnuten und die Antriebsnuten des Transportbands in die zumindest eine Führungsfläche.

Das Verfahren umfasst vorzugsweise, insbesondere während und/oder nach dem Einbringen, ein Glätten einer Bodenfläche, einer linken Flankenfläche und/oder einer rechten Flankenfläche, insbesondere der Bodenfläche und der beiden Flankenflächen, der Nuten. Das Glätten erzeugt vorteilhafterweise eine Oberfläche mit einer gegenüber der Führungsfläche reduzierten Rauheit, woraus sich die entsprechenden, zuvor beschriebenen Vorteile ergeben.

Das Einbringen der Nuten umfasst vorzugsweise eine spanende Bearbeitung der Führungsfläche, insbesondere ein Fräsen und/oder ein Schleifen der Nuten in die zumindest eine Führungsfläche. Durch eine spanende Bearbeitung lassen sich die Nuten besonders schnell, einfach und kostengünstig erzeugen. Eine spanende Bearbeitung hat jedoch den Nachteil, dass sich von dem Transportband abgetragenes Material, beispielsweise in Form von Partikeln und/oder Spänen, auf dem Transportband, insbesondere in den Nuten, ablagern kann. Dadurch kann die Rauheit der Flächen in den Nuten erhöht werden, was die Führung eines Führungselements in den Nuten beeinträchtigen und die Ablagerung von Fremdkörpern und Mikroorganismen in den Nuten begünstigen kann.

Ein Fräsen hat den besonderen Vorteil, dass sich die Nuten damit mit vergleichbarem Aufwand präziser fertigen lassen, und dass sich in der Regel weniger abgetragenes Material in den Nuten ablagert, als bei einem Schleifen. Weiterhin haben die Bodenfläche und die Flankenflächen einer durch Fräsen erzeugten Nut typischerweise eine geringere Rauheit als bei einer durch Schleifen erzeugten Nut.

Das Einbringen der Nuten kann beispielsweise eine Laser-Ablation der Führungsfläche umfassen. Eine Laser-Ablation hat die Vorteile, dass sich die Nuten sehr präzise und mit besonders glatter Bodenfläche und Flankenflächen fertigen lässt. Nachteilig sind jedoch die hohen Investitionskosten für eine Laser-Bearbeitungsstation und die im Verhältnis zu einem Fräsen oder Schleifen geringe Geschwindigkeit des Materialabtrags.

Das Verfahren umfasst vorzugsweise ein mechanisches Entfernen von durch das Einbringen abgetragenem Material von dem Transportband, beispielsweise durch ein Abbürsten, Absaugen und/oder Abblasen des Materials. Das Entfernen erfolgt während und/oder nach dem Einbringen und vorzugsweise vor dem Glätten. Erfolgt das Entfernen vor dem Glätten, muss bei dem Glätten weniger Material geglättet werden, sodass das Glätten schneller und effizienter erfolgen kann.

Das Glätten umfasst vorzugsweise ein Erhitzen zumindest der Bodenfläche, der linken Flankenfläche und/oder der rechten Flankenfläche der Nuten mit einer Wärmeintensität, also einer bestimmten eingebrachten Wärmeleistung pro Flächeneinheit. Vorzugsweise werden alle genannten Flächen der Nuten, insbesondere auch die Führungsfläche des Transportbands, erhitzt.

Die Wärmeintensität führt vorzugsweise zu einem Erhitzen von bei dem Einbringen abgetragenem Material, das sich beispielsweise in den Nuten abgelagert hat, über eine Glasübergangstemperatur, Schmelztemperatur und/oder Zersetzungstemperatur des Materials. Beim Überschreiten der Glasübergangstemperatur geht ein festes Glas oder Polymer in einen gummiartigen bis zähflüssigen Zustand über. Durch das Erhitzen kann somit bei dem Einbringen abgetragenes Material, das sich in den Nuten abgelagert hat, aufgeweicht, angeschmolzen und/oder entfernt werden, sodass die Bodenfläche, die linke Flankenfläche und/oder die rechte Flankenfläche geglättet wird.

Die Wärmeintensität führt vorzugsweise zu einem Erhitzen der Führungsfläche auf eine Temperatur unterhalb einer Glasübergangstemperatur, Schmelztemperatur und/oder Zersetzungstemperatur des Materials. Dadurch wird verhindert, dass die Führungsfläche, insbesondere eine an die zumindest eine Nut angrenzender Kante der Führungsfläche, thermisch verformt wird, wodurch eine Oberflächenstruktur der Führungsfläche zerstört und/oder die Kante verrundet werden könnte, was ein Ausbrechen eines Führungselements aus den Nuten begünstigen könnte.

Aufgrund des höheren Verhältnis von Oberfläche zu Volumen des abgetragenen Materials relativ zu der Führungsfläche erwärmt sich das abgetragene Material leichter als die Führungsfläche. Daher ist es möglich, eine geeignete Wärmeintensität auszuwählen, die zu einem Glätten der Bodenfläche, der linken Flankenfläche und/oder der rechten Flankenfläche führt, ohne dass es zu einer thermischen Verformung der Führungsfläche kommt.

Zum Glätten eines Transportbandes aus einem Polyurethan hat sich beispielsweise eine Wärmeintensität eines Heißluftgebläses mit einer Lufttemperatur von 120 °C bis 180 °C, insbesondere 140 °C bis 160 °C, als besonders vorteilhaft erwiesen.

Das Erhitzen kann beispielsweise ein globales Erhitzen der Bodenfläche, der linken Flankenfläche und der rechten Flankenfläche der Nuten und der Führungsfläche, beispielsweise mit einem Heißluftgebläse, einer Infrarot-Leuchte und/oder einer Plasmaquelle, umfassen. Ein globales Erhitzen hat den Vorteil, dass es nicht zu thermisch induzierten Verspannungen oder Verformungen des Transportbands durch ein inhomogenes Erhitzen des Transportbands kommt. Insbesondere für ein Transportband aus einem Thermoplasten, beispielsweise einem Polyurethan, hat sich ein globales Erhitzen als vorteilhaft herausgestellt, um unkontrollierte Verformungen des Transportbandes zu vermeiden.

Ein globales Erhitzen hat außerdem den Vorteil, dass es technisch einfach umzusetzen ist, wobei jedoch die Wärmeintensität genau gesteuert sein muss, um eine thermische Verformung der Führungsfläche zu verhindern.

Ein Heißluftgebläse hat den besonderen Vorteil, dass durch den heißen Luftstrom neben dem Erhitzen auch ein Entfernen von abgetragenem Material erfolgen kann.

Das Erhitzen kann beispielsweise ein selektives Erhitzen von Flächen der Nuten gegenüber der Führungsfläche, beispielsweise mit einem Laser und/oder einer Plasmaquelle umfassen. Ein selektives Erhitzen hat den Vorteil, dass eine thermische Verformung der Führungsfläche vermieden wird. Zum selektiven Erhitzen sind jedoch technisch aufwändigere Erhitzungsvorrichtungen notwendig als für ein globales Erhitzen.

Nach dem Erhitzen erfolgt vorzugsweise ein kontrolliertes Abkühlen, wobei insbesondere eine Abkühlgeschwindigkeit so gering gewählt ist, dass keine Verspannungen in dem Transportband durch ein zu schnelles Abkühlen entstehen. Das Abkühlen kann beispielsweise erfolgen, indem das Transportband durch einen Kühltunnel geführt wird.

Insbesondere wenn das Transportband nach dem Einbringen der Nuten erhitzt wird, kann es dabei zu einer Dehnung des Transportbandes in Transportrichtung und damit einhergehender Stauchung des Transportbandes quer zur Transportrichtung kommen, wodurch sich eine Breite der Nuten verringern kann. Eine Einbringbreite der Nuten, die bei dem Einbringen der Nuten erzeugt wird, ist daher vorzugsweise größer als eine entsprechende Soll-Breite der Nuten, die für den Betrieb des Transportbands vorgesehen ist.

### Kurze Beschreibung der Zeichnungen

Weitere Vorteile, Ziele und Eigenschaften der Erfindung werden anhand nachfolgender Beschreibung und anliegender Zeichnungen erläutert. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.

Es zeigen:
[Fig.1] eine schematische Darstellung eines erfindungsgemäßen Transportsystems;
[Fig.2] eine vergrößerte Darstellung des erfindungsgemäßen Transportbandes aus Figur 1;
[Fig.3] eine weiter vergrößerte Darstellung des Zentralbereichs der Führungsfläche des Transportbandes aus Figur 1;
[Fig.4] eine Zeichnung einer erfindungsgemäßen Antriebswalze;
[Fig.5] eine schematische Darstellung eines Randbereichs einer Führungsfläche eines erfindungsgemäßen Transportbandes;
[Fig.6] eine schematische Darstellung einer erfindungsgemäßen Ausgestaltung eines Transportbands;
[Fig.7] eine schematische Darstellung einer weiteren erfindungsgemäßen Ausgestaltung eines Transportbands;
[Fig.8] eine schematische Darstellung einer weiteren erfindungsgemäßen Ausgestaltung eines Transportbands;
[Fig.9] eine schematische Darstellung einer weiteren erfindungsgemäßen Ausgestaltung eines Transportbands;
[Fig.10] eine schematische Darstellung einer erfindungsgemäßen Ausgestaltung eines Transportsystems;
[Fig.11] eine schematische Darstellung des erfindungsgemäßen Transportsystems und
[Fig.12] eine schematische Darstellung eines Verlaufs einer Führungsstärke abhängig von einer Querbelastung des Transportbandes aus Figur 11.

### Fig.1

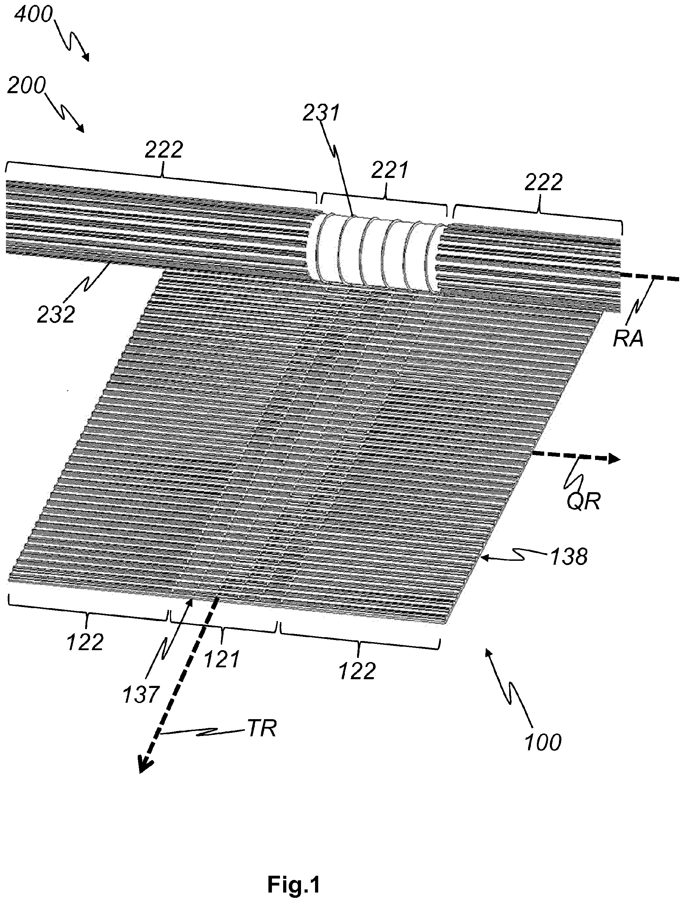

[Fig.1] zeigt eine schematische Darstellung eines erfindungsgemäßen Transportsystems 400 zum Transportieren von Gütern in einer Transportrichtung TR entlang einer Transportbandebene eines erfindungsgemäßen Transportbandes 100. Das Transportband 100 ist von einer erfindungsgemäßen Antriebswalze 200 in der Transportrichtung TR angetrieben und entlang der Transportrichtung TR geführt.

Das dargestellte Transportband 100 umfasst eine Führungsfläche an einer Führungsseite des Transportbandes 100, die beispielsweise eine Flächenseite des Transportbandes 100 bilden kann. Insbesondere kann die Führungsfläche die gesamte Führungsseite einnehmen.

Die Führungsfläche weist zwei Randbereiche 122 und einen entlang einer Querrichtung QR entlang der Transportebene und quer zur Transportrichtung TR zwischen den Randbereichen 122 angeordneten Zentralbereich 121 auf. Beispielsweise in dem Zentralbereich 121 weist die Führungsfläche 120 eine Mehrzahl von, beispielsweise sechs, Führungsnuten 137 (nur exemplarisch beschriftet) zur Führung des Transportbandes 100 entlang der Transportrichtung TR auf. Die Längsachsen der Führungsnuten 137 sind jeweils entlang der Transportrichtung TR ausgerichtet.

In den Randbereichen 122, und insbesondere auch in dem Zentralbereich 121, weist die Führungsfläche eine Vielzahl von Antriebsnuten 138 (nur exemplarisch beschriftet) zum Antrieb des Transportbandes 100 auf. Die Längsachsen der Antriebsnuten 138 sind jeweils entlang der Querrichtung QR ausgerichtet.

Die Antriebswalze 200 ist beispielsweise im Wesentlichen zylinderförmig und weist eine um eine Rotationsachse RA umlaufende Mantelfläche auf, an der das Transportband 100 anliegt, wobei das Transportband 100 durch eine Rotation der Antriebswalze 200 um die Rotationsachse RA angetrieben wird.

Die Mantelfläche weist zwei Randbereiche 222 und einen entlang der Rotationsachse RA zwischen den Randbereichen 222 angeordneten Zentralbereich 221 auf. Beispielsweise in dem Zentralbereich 221 weist die Mantelfläche 220 eine Mehrzahl von, beispielsweise sechs, Führungsstegen 231 (nur exemplarisch beschriftet) zum Eingriff in die Führungsnuten 137 zur Führung des Transportbandes 100 entlang der Transportrichtung TR auf. Die Führungsstege 231 sind jeweils in Umfangsrichtung der Antriebswalze 200 um die Rotationsachse RA umlaufend angeordnet.

In den Randbereichen 222 weist die Mantelfläche 220 eine Vielzahl von Antriebsstegen 232 (nur exemplarisch beschriftet) zum Eingriff in die Antriebsnuten 138 zum Antrieb des Transportbandes 100 auf. Die Längsachsen der Antriebsstege 232 sind jeweils entlang der Rotationsachse RA ausgerichtet.

### Fig.2

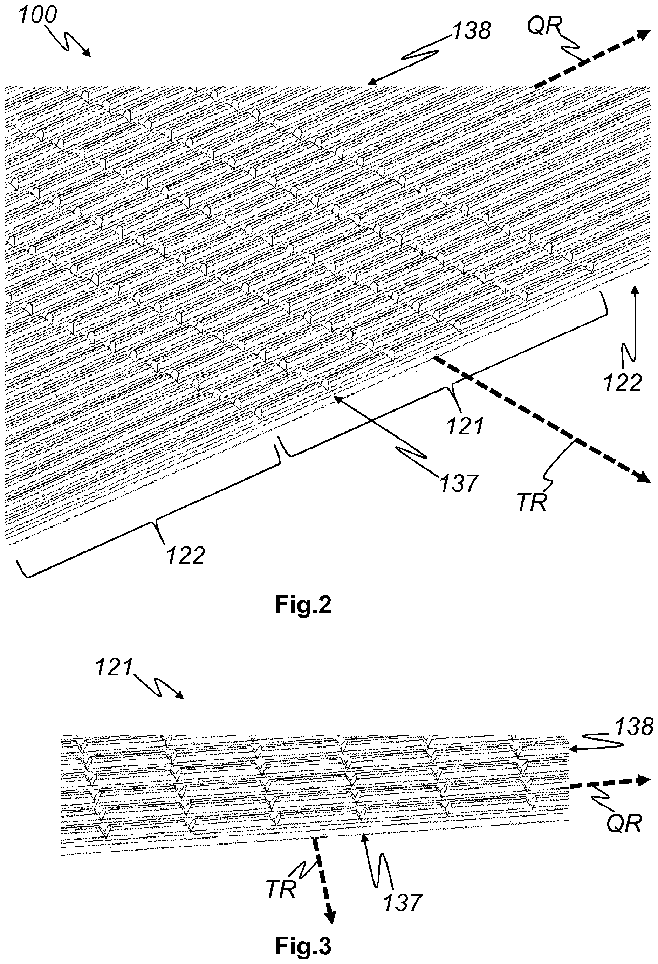

[Fig.2] zeigt eine vergrößerte Darstellung des erfindungsgemäßen Transportbandes 100 aus Figur 1. In dieser Darstellung sind die Führungsnuten 137 im Zentralbereich 121 der Führungsfläche 120 und die Antriebsnuten 138 im Zentralbereich 121 und den Randbereichen 122 der Führungsfläche 120 deutlicher zu erkennen.

### Fig.3

[Fig.3] zeigt eine weiter vergrößerte Darstellung des Zentralbereichs 121 der Führungsfläche des Transportbandes aus Figur 1. In dieser Darstellung ist deutlich zu erkennen, dass sich die Antriebsnuten 138 und Führungsnuten 137 im Zentralbereich 121 kreuzen.

### Fig.4

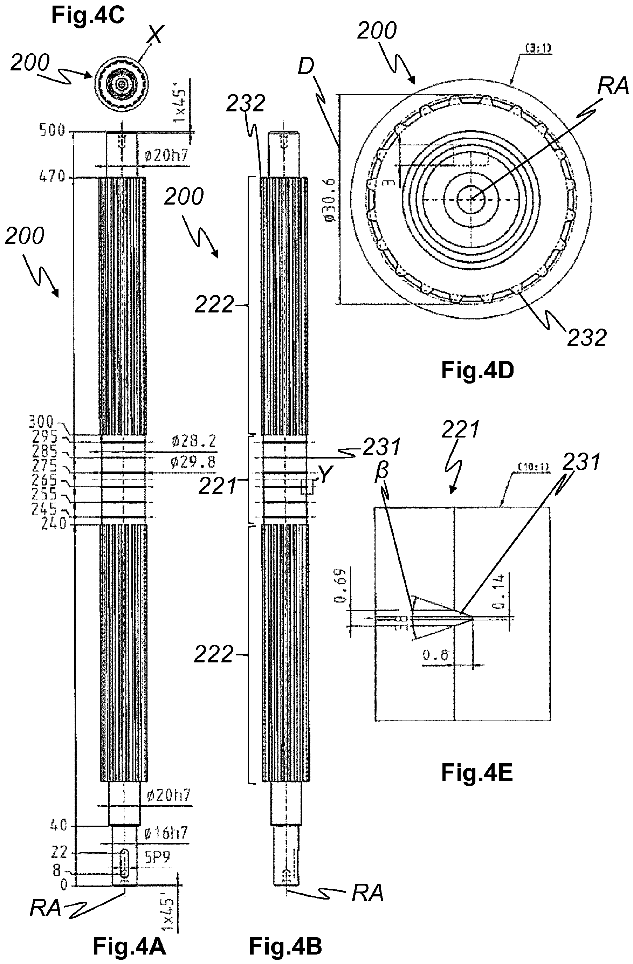

[Fig.4] zeigt eine Zeichnung einer erfindungsgemäßen Antriebswalze 200, wobei Maße der Antriebswalze 200 lediglich als Beispiele angegeben sind. Figur 4A und 4B zeigen jeweils eine Seitenansicht der Antriebswalz 200 mit und ohne Bemaßung. Figur 4C zeigt eine Stirnansicht der Antriebswalze 200. Figur 4D ist eine vergrößerte Darstellung des mit X markierten Ausschnitts der Figur 4C. Figur 4E ist eine vergrößerte Darstellung des mit Y markierten Ausschnitts der Figur 4B.

Die dargestellte Antriebswalze 200 ist beispielsweise ebenso ausgestaltet, wie zur in Figur 1 dargestellten Antriebswalze 200 beschrieben.

In Figur 4D ist erkennbar, dass die Antriebsstege 232 beispielsweise einen sich von der Rotationsachse RA nach Außen verjüngenden trapezförmigen Querschnitt, insbesondere mit abgerundeten Kanten, haben können. Ein solcher Querschnitt erlaubt einen zuverlässigen Antrieb, ohne dass die Gefahr besteht, dass die Antriebsstege 232 in Antriebsnuten eines Transportbandes verklemmen.

Inklusive der Antriebsstege 232 hat die Antriebswalze 200 beispielsweise einen Durchmesser D von 30,6 mm. Im Zentralbereich 221 hat die Antriebswalze 200 beispielsweise einen Durchmesser von 29,8 mm inklusive der Führungsstege 231 und von 28,9 mm zwischen den Führungsstegen 231.

In Figur 4E ist ein beispielhafter Querschnitt eines Führungssteges 231 dargestellt. Der Querschnitt ist beispielsweise v-förmig, beispielsweise mit einem Öffnungswinkel α von 38°. Dadurch kann der Führungssteg 231 einfach und ohne zu verkanten in eine Führungsnut eines Transportbandes eingeführt werden und bietet gleichzeitig eine zuverlässige Führung. Das bezüglich der Rotationsachse RA äußere Ende des Führungssteges 231 kann abgeflacht sein, beispielsweise mit einer Breite von 0,14 mm. Dadurch wir die Materialbelastung eines von dem Führungssteg geführten Transportbandes gegenüber einem nicht abgeflachten Ende reduziert.

### Fig.5

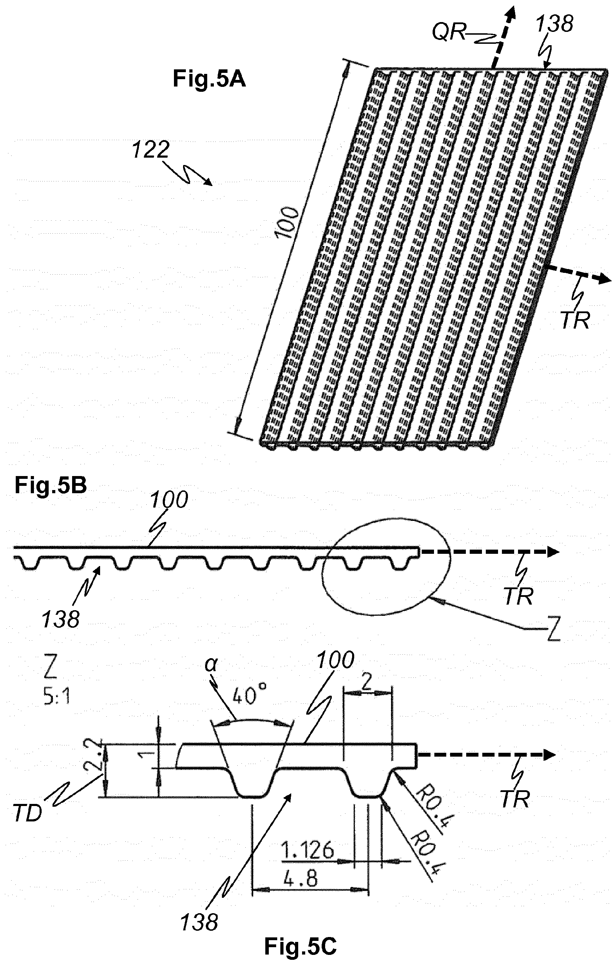

[Fig.5] zeigt eine schematische Darstellung eines Randbereichs 122 einer Führungsfläche eines erfindungsgemäßen Transportbandes 100. Dabei zeigt Figur 5A eine Aufsicht auf den Randbereich 122 und Figur 5B einen Querschnitt entlang der Transportrichtung TR des Transportbandes 100. Figur 5C ist eine Vergrößerung des mit Z bezeichneten Bereichs der Figur 5B. In der Figur angegebene Maße sind lediglich beispielhaft zu verstehen.

Der Randbereich 122 umfasst eine Anzahl von Antriebsnuten 138, deren Längsachsen entlang einer Querrichtung QR quer zur Transportrichtung TR ausgerichtet sind. Ein Querschnitt der Antriebsnuten 138 entlang der Transportrichtung TR ist beispielsweise trapezförmig, wobei sich die Antriebsnuten 138 vom Transportband 100 nach außen hin erweitern. Ein solcher Querschnitt erlaubt einen zuverlässigen Antrieb, ohne dass die Gefahr besteht, dass Antriebsstege einer Antriebswalze in den Antriebsnuten 138 verklemmen. Dabei ergeben sich zwischen den Antriebsnuten 138 beispielsweise Stege mit ebenfalls trapezförmigem Querschnitt und einem Flankenwinkel β von 40°. Insbesondere können die Kanten der Antriebsnuten 138 abgerundet, beispielsweise mit einem Krümmungsradius von 0,4 mm, ausgebildet sein.

Ein Abstand der Antriebsnuten 138 entlang der Transportrichtung TR beträgt beispielsweise 4,8 mm in einem unbelasteten Zustand des Transportbandes 100. Dadurch kann das Transportband 100 vorteilhafterweise mit aus dem Stand der Technik bekannten Antriebswalzen für T5-Zahnriemen verwendet werden, die Antriebsstege mit einem Abstand von 5 mm aufweisen. Wird das Transportband 100 in einem Transportsystem eingesetzt, steht es entlang der Transportrichtung unter Zugspannung, sodass sich der Abstand der Antriebsnuten 138, insbesondere auf 5 mm, erhöht.

Eine Bodenbreite der Antriebsnuten 138 beträgt beispielsweise 2,8 mm, eine Öffnungsbreite beispielsweise 2,55 mm. Eine Transportbanddicke TD des Transportbandes 100 beträgt beispielsweise 2,2 mm; eine Nuttiefe beispielsweise 1,2 mm.

### Fig.6

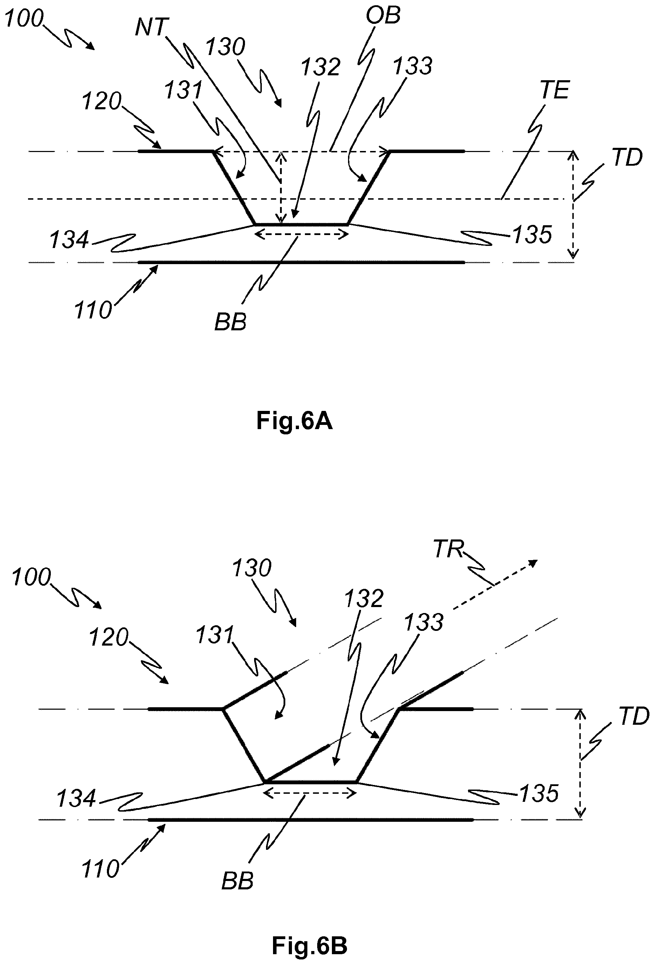

[Fig.6] zeigt eine schematische Darstellung einer erfindungsgemäßen Ausgestaltung eines Transportbands 100 als Querschnitt (Fig.6A) und als perspektivischen Anschnitt (Fig.6B). Das Transportband 100 ist für ein Transportsystem (nicht dargestellt) zum Transportieren von Gütern (nicht dargestellt) in einer Transportrichtung TR entlang einer Transportbandebene TE des Transportbands 100 ausgelegt. In der Querschnittsdarstellung liegen die Transportebene TE und die Transportrichtung TR senkrecht zur Zeichenebene.

Das Transportband 100 umfasst an einer Tragseite des Transportbands 100 eine entlang der Transportbandebene TE ausgerichtete Tragfläche 110 zum Tragen der Güter und an einer Führungsseite des Transportbands 100 eine entlang der Transportbandebene TE ausgerichtete Führungsfläche 120 zur Führung des Transportbands 100. Die Tragseite liegt beispielsweise der Führungsseite bezüglich der Transportbandebene TE gegenüber.

In der Führungsfläche 120 ist eine Nut 130, insbesondere eine Führungsnut oder Antriebsnut eingebracht.

Die Nut 130 umfasst eine Bodenfläche 132 zur Begrenzung einer Eindringtiefe eines Antriebs- oder Führungssteges in das Transportband 100 und eine schräg zur Transportbandebene angeordnete und die Führungsfläche 120 mit der Bodenfläche 132 verbindende linke Flankenfläche 131 und zumindest eine schräg zur Transportbandebene TE angeordnete und die Führungsfläche 120 mit der Bodenfläche 132 verbindende rechte Flankenfläche 133.

Eine Bodenbreite BB der Bodenfläche 132 senkrecht zur Transportrichtung TR ist kleiner als eine Öffnungsbreite OB der Nut 130 senkrecht zur Transportrichtung TR und in einer Ebene mit der Führungsfläche 120.

Eine Nuttiefe NT der Nut 130 senkrecht zur Transportbandebene TE beträgt beispielsweise zumindest 50 % einer Transportbanddicke TD senkrecht zur Transportbandebene TE.

Die Bodenfläche 132 ist beispielsweise plan und entlang der Transportbandebene TE ausgerichtet, wobei die linke Flankenfläche 131 an einem linken Übergangsbereich 134 und die rechte Flankenfläche 133 an einem rechten Übergangsbereich 135 jeweils in Form einer Kante in die Bodenfläche 132 übergehen.

Vorzugsweise sind die linke Flankenfläche 131 und die rechte Flankenfläche 133 plan.

In der dargestellten Ausgestaltung hat die Nut 130 beispielsweise einen trapezförmigen Querschnitt senkrecht zur Transportrichtung TR.

### Fig.7

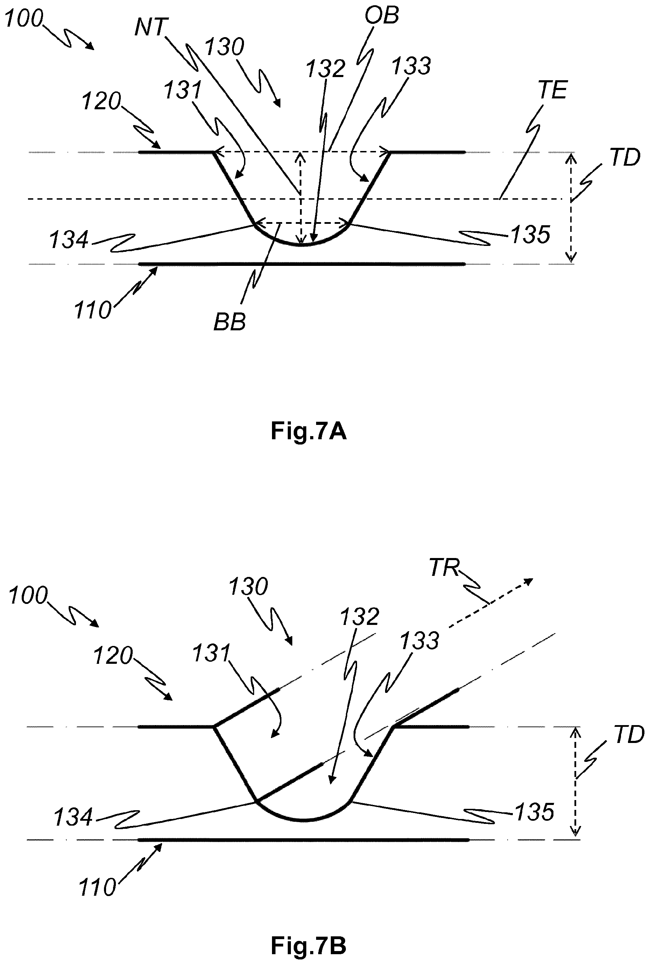

[Fig.7] zeigt eine schematische Darstellung einer weiteren erfindungsgemäßen Ausgestaltung eines Transportbands 100 als Querschnitt (Fig.7A) und als perspektivischen Anschnitt (Fig.7B). In der Querschnittsdarstellung liegen die Transportebene TE und die Transportrichtung TR senkrecht zur Zeichenebene.

Das in Figur 7 dargestellte Transportband 100 unterscheidet sich von dem in Figur 6 dargestellten Transportband 100 darin, dass die Bodenfläche 132 nicht plan, sondern um die Längsachse der Nut 130 konkav zur Nut 130 hin gewölbt ist. Dadurch können die Übergangsbereiche 134, 135 wie dargestellt als Kanten oder abgerundet ausgestaltet sein.

### Fig.8

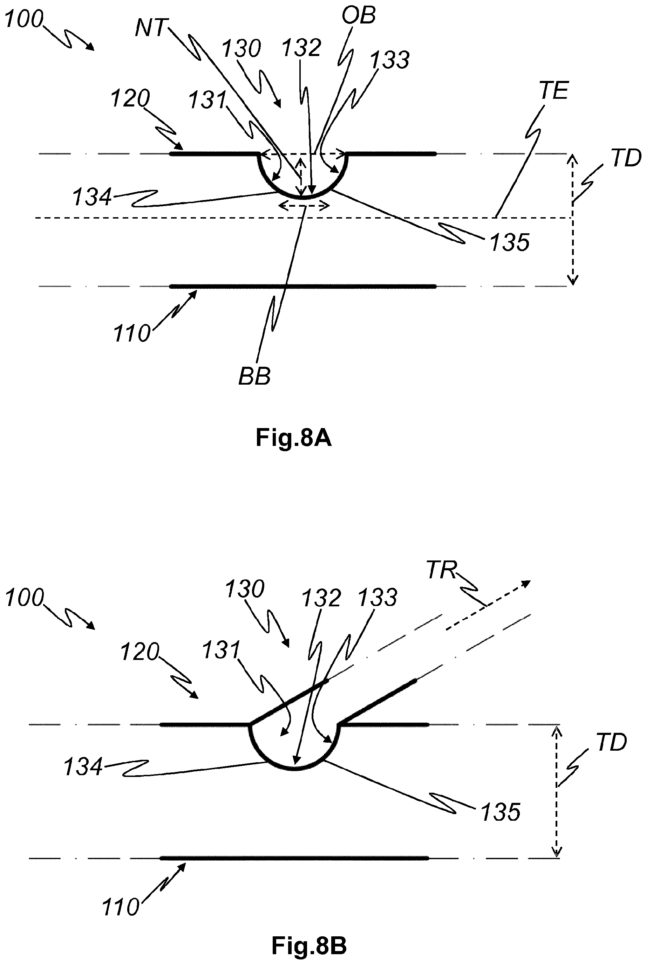

[Fig.8] zeigt eine schematische Darstellung einer Ausgestaltung eines Transportbands 100 mit einer alternativen Ausgestaltung der Übergangsbereiche 134, 135 als Querschnitt (Fig.8A) und als perspektivischen Anschnitt (Fig.8B). In der Querschnittsdarstellung liegen die Transportebene TE und die Transportrichtung TR senkrecht zur Zeichenebene.

Das in Figur 8 dargestellte Transportband 100 unterscheidet sich von dem in Figur 7 dargestellten Transportband 100 darin, dass die linke Seitenfläche 131 und die rechte Seitenfläche 133 nicht plan, sondern um die Längsachse der Nut 130 konkav zur Nut 130 hin gewölbt sind.

Ferner sind der linke Übergangsbereich 134 und der rechte Übergangsbereich 135 jeweils nicht als Kante, sondern abgerundet ausgestaltet.

In der dargestellten Ausgestaltung hat die Nut 130 beispielsweise einen halbkreisförmigen Querschnitt senkrecht zur Transportrichtung TR.

### Fig.9

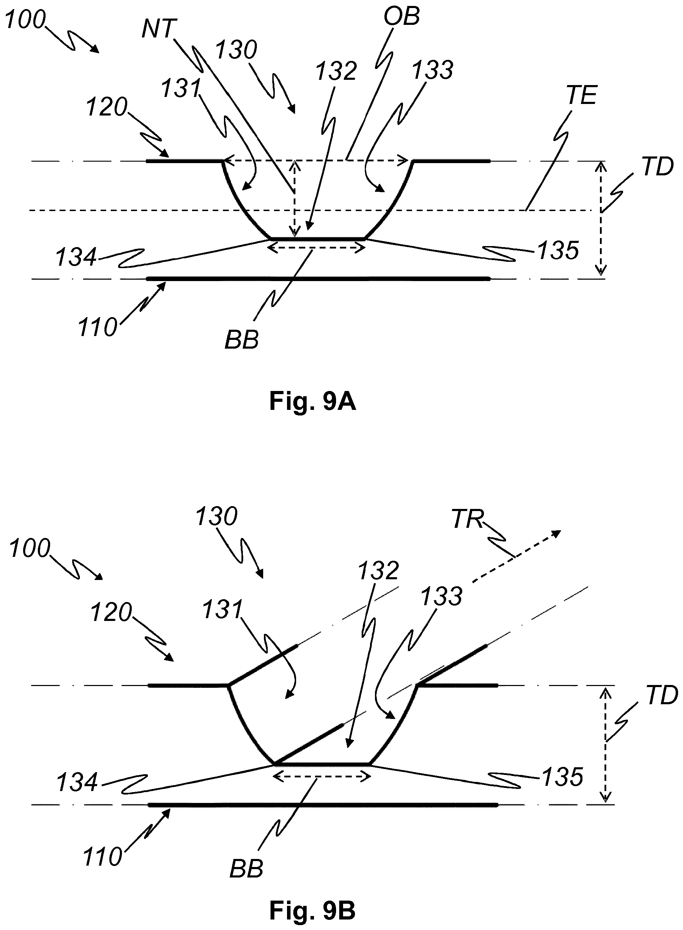

[Fig.9] zeigt eine schematische Darstellung einer weiteren erfindungsgemäßen Ausgestaltung eines Transportbands 100 als Querschnitt (Fig.9A) und als perspektivischen Anschnitt (Fig.9B).

Das in Figur 9 dargestellte Transportband 100 unterscheidet sich von dem in Figur 6 dargestellten Transportband 100 darin, dass die linke Flankenfläche 131 und die rechte Flankenfläche 133 nicht plan, sondern um die Längsachse zur Nut 130 hin konkav gewölbt sind. Dadurch können die Übergangsbereiche 134, 135 wie dargestellt als Kanten oder abgerundet ausgestaltet sein.

### Fig.10

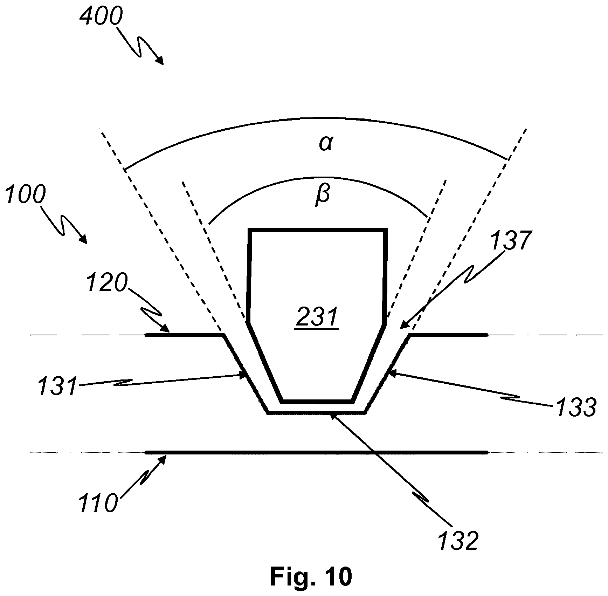

[Fig.10] zeigt eine schematische Darstellung einer erfindungsgemäßen Ausgestaltung eines Transportsystems 400 mit einem erfindungsgemäßen Transportband 100 und einem Führungssteg 231 als Querschnitt. Der Führungssteg 231, beispielsweise ein in Umfangsrichtung um die zumindest eine Antriebswalze (nicht dargestellt) des Transportsystems 400 verlaufender Mantelsteg, greift zur Führung des Transportbands 100 entlang der Transportrichtung TR in eine zugehörigen Führungsnut 137 des Transportbands 100 ein.

Ein Antriebssteg der Antriebswalze und/oder eine zugehörige Antriebsnut des Transportbands können analog zu dem hier dargestellten Führungssteg 231 und der hier dargestellten Führungsnut 137 ausgestaltet sein.

Das in Figur 10 dargestellte Transportband 100 entspricht beispielsweise dem in Figur 6 dargestellten Transportband 100, wobei der Übersichtlichkeit halber nicht alle Merkmale erneut mit Bezugszeichen versehen sind.

Die linke Flankenfläche 131 und die rechte Flankenfläche 133 der Führungsnut 137 schließen einen Flankenwinkel α ein, der beispielsweise 40° beträgt.

Der Führungssteg 231 ist beispielsweise sich auf das Transportband 100 zu mit einem Öffnungswinkel β verjüngend, insbesondere sich v-förmig mit einer abgestumpften Spitze verjüngend, ausgestaltet. Der Öffnungswinkel β ist vorzugsweise kleiner als der Flankenwinkel α und beträgt beispielsweise 38°.

Vorzugsweise ist der Führungssteg 231 in einem Montagezustand des Transportbandes von der linken Flankenfläche 131, der Bodenfläche 132 und der rechten Flankenfläche 133 der Führungsnut 137 beabstandet.

### Fig.11

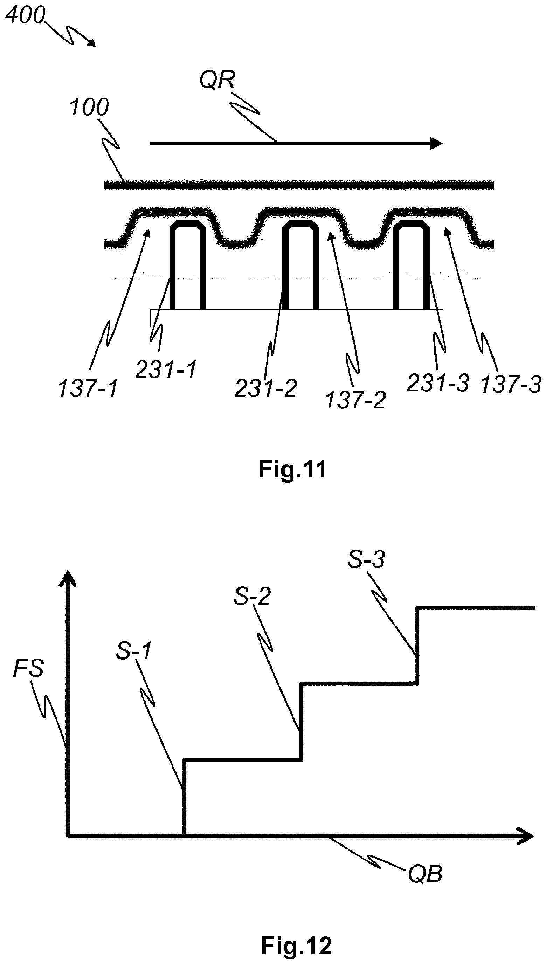

[Fig.11] zeigt eine schematische Darstellung des erfindungsgemäßen Transportsystems 400. Im dargestellten Beispiel ist eine Mehrzahl der Führungsnuten 137 und der darin eingreifenden Führungsstege 231 so ausgestaltet, dass ohne Querbelastung des Transportbandes 100 entlang seiner Querrichtung QR ein jeweils unterschiedlich großes Querspiel zwischen den Führungsnuten 137 und den zugehörigen Führungsstegen 231 besteht. Beispielsweise ist ein erster Führungssteg 231-1 in Querrichtung QR an einem rechten Rand einer ersten Führungsnut 137-1; ein zweiter Führungssteg 231-2 zentral an einer zweiten Führungsnut 231-2 und ein dritter Führungssteg 231-3 an einem linken Rand einer dritten Führungsnut 137-3 ausgerichtet. Dadurch ergibt sich abhängig von der Größe einer Querbelastung des Transportbandes 100 eine unterschiedlich große Kontaktfläche zwischen den Führungsstegen 231 und Führungsnuten 137 und somit eine unterschiedlich große Führungsstärke. Dieser Zusammenhang ist in Figur 12 dargestellt.

### Fig.12

[Fig.12] zeigt eine schematische Darstellung eines Verlaufs einer Führungsstärke FS abhängig von einer Querbelastung QB des in Figur 11 dargestellten Transportbandes 100. Ohne Querbelastung QB gibt es keine Führungsstärke FS, da die Führungsstege 231 aufgrund ihres mechanischen Spiels in Querrichtung QR nicht mit den Führungsnuten 137 in Kontakt stehen. Mit zunehmender Querbelastung QB verformt sich das Transportband in Querrichtung zunehmend. Dadurch kommen die Führungsstege 231-1, 231-2 und 231-3 nach und nach mit den jeweiligen Führungsnuten 137-1, 137-2 und 137-3 in Kontakt, sodass die Führungsstärke FS an den Stufen S-1, S-2 und S-3 bei jedem zusätzlichen Kontakt stufenweise ansteigt.

### Liste der Bezugszeichen

- 100: Transportband
- 110: Tragfläche
- 120: Führungsfläche
- 121: Zentralbereich
- 122: Randbereich
- 130: Nut
- 131: linke Flankenfläche
- 132: Bodenfläche
- 133: rechte Flankenfläche
- 134: linker Übergangsbereich
- 135: rechter Übergangsbereich
- 137: Führungsnut
- 200: Antriebswalze
- 221: Zentralbereich
- 222: Randbereich
- 231: Führungssteg
- 232: Antriebssteg
- 138: Antriebsnut
- 400: Transportsystem
- BB: Bodenbreite
- D: Durchmesser
- FS: Führungsstärke
- NT: Nuttiefe
- OB: Öffnungsbreite
- RA: Rotationsachse
- QB: Querbelastung
- QR: Querrichtung
- S: Stufe
- TD: Transportbanddicke
- TE: Transportbandebene
- TR: Transportrichtung
- α: Flankenwinkel
- β: Öffnungswinkel

## Patentansprüche

1. Transportsystem (400) zum Transportieren von Gütern in einer Transportrichtung (TR) entlang einer Transportbandebene (TE) eines Transportbands (100), wobei
a) das Transportband (100) an einer Tragseite des Transportbands (100) zumindest eine entlang der Transportbandebene (TE) ausgerichtete Tragfläche (110) zum Tragen der Güter umfasst, und
b) das Transportband (100) an einer Führungsseite des Transportbands (100) zumindest eine entlang der Transportbandebene (TE) ausgerichtete Führungsfläche (120) zur Führung des Transportbands (100) umfasst, und
c) die Führungsfläche (120) eine Mehrzahl von Nuten (130) umfasst, wobei die Nuten (130)
d) eine Mehrzahl von Führungsnuten (137) umfassen, wobei eine Längsachse jeder der Führungsnuten (137) entlang der Transportrichtung (TR) ausgerichtet ist, und
e) wobei das Transportsystem (400) zumindest eine Antriebswalze (200) zum Antrieb des an einer Mantelfläche der Antriebswalze (200) anliegenden Transportbandes (100) durch eine Rotation der Antriebswalze (200) um eine Rotationsachse (RA) umfasst,
f) wobei die Mantelfläche eine Mehrzahl von Stegen umfasst,
g) wobei die Stege eine Anzahl von Antriebsstegen (232) zum Antrieb des Transportbands (100) entlang der Transportrichtung (TR) umfassen, wobei eine Längsachse jedes der Antriebsstege (232) entlang der Rotationsachse (RA) ausgerichtet ist,
h) wobei die Stege eine Mehrzahl von in die Führungsnuten (137) eingreifenden Führungsstegen (231) zur Führung des Transportbands (100) entlang der Transportrichtung (TR) umfassen, wobei jeder der Führungsstege (231) in Umfangsrichtung der Antriebswalze (200) um die Rotationsachse (RA) umläuft,
**dadurch gekennzeichnet, dass**
i) die Nuten (130) eine Anzahl von Antriebsnuten (138) umfassen, wobei eine Längsachse jeder der Antriebsnuten (138) in einer Querrichtung (QR) quer zur Transportrichtung (TR) ausgerichtet ist, und die Antriebsstege (232) zum Antrieb des Transportbands (100) in die Antriebsnuten (138) eingreifen,
j) wobei zumindest eine Führungsnut (137) des Transportbandes (100) und der darin eingreifende Führungssteg (231) der Antriebswalze (200) so ausgestaltet sind, dass ohne Querbelastung des Transportbandes (100) in Querrichtung (QR) ein mechanisches Querspiel in Querrichtung (QR) zwischen der Führungsnut (137) und dem Führungssteg (231) besteht, und
k) wobei eine Mehrzahl der Führungsnuten (137) und der darin eingreifenden Führungsstege (231) so ausgestaltet sind, dass ohne Querbelastung des Transportbandes (100) ein jeweils unterschiedlich großes Querspiel zwischen den Führungsnuten (137) und den zugehörigen Führungsstegen (231) besteht.

2. Transportsystem (400) nach Anspruch 1,
**dadurch gekennzeichnet, dass**
eine Bodenbreite (BB) zumindest einer Nut (130) des Transportbandes (100) 100 % bis 150 %, bevorzugt 110 % bis 130 %, einer zu der Bodenbreite (BB) parallelen Breite des in die Nut (130) eingreifenden Steges der Antriebswalze (200) beträgt.

3. Transportsystem (400) nach einem der Ansprüche 1 bis 2,
**dadurch gekennzeichnet, dass**
die Führungsfläche (120) des Transportbands (100) zwei Randbereiche (122) und einen in Querrichtung (QR) zwischen den Randbereichen (122) angeordneten Zentralbereich (121) umfasst, wobei die Führungsnuten (137) in dem Zentralbereich (121) angeordnet sind, und die Antriebsnuten (138) in den Randbereichen (122) und in dem Zentralbereich (121) angeordnet sind, wobei keine Führungsnuten (137) in den Randbereichen (122) angeordnet sind.

4. Transportsystem (400) nach einem der Ansprüche 1 bis 3,
**dadurch gekennzeichnet, dass**
das Transportband (100) eine Transportbanddicke (TD) senkrecht zur Transportebene (TE) von 1 mm bis 5 mm aufweist.

5. Transportsystem (400) nach einem der Ansprüche 1 bis 4,
**dadurch gekennzeichnet, dass**
das Transportband (100) zumindest eine die Nuten (130) enthaltende Führungsschicht, zumindest eine die Tragfläche (110) bildende Tragschicht und zumindest eine Verstärkungsschicht zur mechanischen Verstärkung des Transportbandes umfasst.

6. Transportsystem (400) nach einem der Ansprüche 1 bis 5,
**dadurch gekennzeichnet, dass**
zumindest eine der Nuten (130)
a) zumindest eine Bodenfläche (132) zur Begrenzung einer Eindringtiefe des Führungssteges (231) oder Antriebssteges (232) in das Transportband (100) und
b) zumindest eine schräg zur Transportbandebene (TE) angeordnete und die Führungsfläche (120) mit der Bodenfläche (132) verbindende linke Flankenfläche (131) und
c) zumindest eine schräg zur Transportbandebene (TE) angeordnete und die Führungsfläche (120) mit der Bodenfläche (132) verbindende rechte Flankenfläche (133) umfasst, wobei
d) eine Bodenbreite (BB) der Bodenfläche (132) senkrecht zur Längsachse der Nut (130) kleiner als eine Öffnungsbreite (OB) der Nut (130) senkrecht zur Längsachse der Nut (130) und in einer Ebene mit der Führungsfläche (120) ist.

7. Transportsystem (400) nach einem der Ansprüche 1 bis 6,
**dadurch gekennzeichnet, dass**
die Mantelfläche der zumindest einen Antriebswalze (200) zwei Randbereiche (222) und einen entlang der Rotationsachse (RA) zwischen den Randbereichen (222) angeordneten Zentralbereich (221) umfasst, wobei die Führungsstege (231) ausschließlich in dem Zentralbereich (221) und die Antriebsstege (232) ausschließlich in den Randbereichen (222) angeordnet sind.

8. Transportsystem (400) nach einem der Ansprüche 1 bis 7,
**dadurch gekennzeichnet, dass**
ein senkrecht zur Rotationsachse (RA) gemessener Durchmesser (D) der Antriebswalze (200) 15 mm bis 45 mm, bevorzugt 25 mm bis 35 mm, beträgt.

9. Verfahren zur Herstellung eines Transportsystems (400) nach einem der Ansprüche 1 bis 8, mit folgenden Schritten in der genannten Reihenfolge:
a) Bereitstellen eines Walzenrohlings mit einer um eine Rotationsachse (RA) rotationssymmetrischen Mantelfläche mit zwei Randbereiche (222) und einem entlang der Rotationsachse (RA) zwischen den Randbereichen (222) angeordneten Zentralbereich (221), und
b) Längsabtragen von Material von der Mantelfläche zur Erzeugung von entlang der Rotationsachse (RA) verlaufenden Längsrillen in der Mantelfläche mit dazwischenliegenden Antriebsstegen (232) in den Randbereichen (222) und in dem Zentralbereich (221), und
c) Querabtragen von Material von der Mantelfläche zur Erzeugung von in Umfangsrichtung des Walzenrohlings um die Rotationsachse (RA) umlaufenden Querrillen in der Mantelfläche mit dazwischenliegenden Führungsstegen (232) in dem Zentralbereich (221) und
d) Bereitstellen eines Rohlings für das Transportband (100) des Transportsystems (400) mit zumindest einer entlang einer Transportbandebene (TE) des Transportbands (100) ausgerichteten Führungsfläche (120) zur Führung des Transportbands (100) an der Führungsseite des Transportbandes (100),
e) Einbringen einer Anzahl von Nuten (130) umfassend die Führungsnuten (137) und die Antriebsnuten (138) des Transportbands (100) in die zumindest eine Führungsfläche (120), und
f) Glätten einer Bodenfläche (132), einer linken Flankenfläche (131) und/oder einer rechten Flankenfläche (133) der Nuten (130).

10. Verfahren gemäß Anspruch 9,
**dadurch gekennzeichnet, dass**
das Längsabtragen über eine gesamte Länge (L) des Walzenrohlings entlang der Rotationsachse (RA) erfolgt.

11. Verfahren nach Anspruch 10,
**dadurch gekennzeichnet, dass**
das Einbringen eine spanende Bearbeitung der Führungsfläche (120), bevorzugt ein Fräsen und/oder ein Schleifen der Nuten (130) in die zumindest eine Führungsfläche (120), umfasst.

12. Verfahren nach einem der Ansprüche 10 bis 11,
**dadurch gekennzeichnet, dass**
das Glätten ein Erhitzen zumindest der Bodenfläche (132), der linken Flankenfläche (131) und/oder der rechten Flankenfläche (133) der Nuten (130) mit einer Wärmeintensität umfasst, wobei die Wärmeintensität zum Erhitzen von bei dem Einbringen abgetragenem Material des Transportbands (100) über einer Glasübergangstemperatur, Schmelztemperatur und/oder Zersetzungstemperatur des Materials und bevorzugt zum Erhitzen der Führungsfläche (120) auf eine Temperatur unterhalb einer Glasübergangstemperatur, Schmelztemperatur und/oder Zersetzungstemperatur des Materials ausgewählt ist.

13. Verfahren nach Anspruch 12,
**dadurch gekennzeichnet, dass**
das Erhitzen ein globales Erhitzen der Bodenfläche (132), der linken Flankenfläche (131) und der rechten Flankenfläche (133) der Nuten (130) und der Führungsfläche (120), bevorzugt mit einem Heißluftgebläse, umfasst.

## Claims

1. Transport system (400) for conveying goods in a conveying direction (TR) along a conveyor belt plane (TE) of a conveyor belt (100), wherein
a) on a bearing side of the conveyor belt (100), the conveyor belt (100) comprises at least one bearing surface (110) for carrying the goods, which surface is oriented along the conveyor belt plane (TE), and
b) on a guiding side of the conveyor belt (100), the conveyor belt (100) comprises at least one guide surface (120), oriented along the conveyor belt plane (TE), for guiding the conveyor belt (100), and
c) the guide surface (120) includes a plurality of notches (130),
d) wherein the notches (130) include a plurality of guide notches (137), wherein a longitudinal axis of each of the guide notches (137) is oriented along the conveying direction (TR), and
e) wherein the transport system (400) includes at least one drive roller (200) for driving the conveyor belt (100), which is in contact with an outer surface of the drive roller (200), through a rotation of the drive roller (200) about an axis of rotation (RA),
f) wherein the outer surface includes a plurality of ridges,
g) wherein the ridges include a number of drive ridges (232) for driving the conveyor belt (100) along the conveying direction (TR), wherein a longitudinal axis of each of the drive ridges (232) is oriented along the axis of rotation (RA),
h) wherein the ridges include a plurality of guide ridges (231) that engage in the guide notches (137) for guiding the conveyor belt (100) along the conveying direction (TR), wherein each of the guide ridges (231) extends around the axis of rotation (RA) in the circumferential direction of the drive roller (200),
**characterized in that**
i) the notches (130) include a number of drive notches (138), wherein a longitudinal axis of each of the drive notches (138) is oriented in a transverse direction (QR), transversely to the conveying direction (TR), and the drive ridges (232) engage in the drive notches (138) for driving the conveyor belt (100) and
j) wherein at least one guide notch (137) of the conveyor belt (100), and the guide ridge (231) of the drive roller (200) engaging therein, are configured such that a mechanical transverse play in the transverse direction (QR) exists between the guide notch (137) and the guide ridge (231), without transverse stressing of the conveyor belt (100) in the transverse direction (QR),
k) wherein a plurality of the guide notches (137) and the guide ridges (231) engaging therein are configured such that a differently large transverse play exists between the guide notches (137) and the associated guide ridges (231), without transverse stressing of the conveyor belt (100).

2. Transport system (400) according to claim 1,
**characterized in that**
a base width (BB) of at least one notch (130) of the conveyor belt (100) amounts to 100% to 150%, preferably 110% to 130%, of a width of the ridge of the drive roller (200) engaging in the notch (130) parallel to the base width (BB).

3. Transport system (400) according to one of the claims 1 to 2,
**characterized in that**
the guide surface (120) of the conveyor belt (100) includes two edge regions (122) and a central region (121) arranged in transverse direction (QR) between the edge regions (122), wherein the guide notches (137) are arranged in the central region (121) and the drive notches (138) are arranged in the edge regions (122) and in the central region (121), wherein no guide notches (137) are arranged in the edge regions (122).

4. Transport system (400) according one of the claims 1 to 3,
**characterized in that**
the conveyor belt (100) has a conveyor belt thickness (TD), perpendicular to the conveyor belt plane (TE), from 1 mm to 5 mm.

5. Transport system (400) according to one of the claims 1 to 4,
**characterized in that**
the conveyor belt (100) includes at least one guide layer containing the notches (130), at least one bearing layer forming the bearing surface (110) and at least one reinforcement layer for mechanical reinforcement of the conveyor belt.

6. Transport system (400) according to one of the claims 1 to 6,
**characterized in that**
at least one of the notches (130) includes
a) at least one base surface (132) for limiting a penetration depth of the guide ridge (231) or drive ridge (232) into the conveyor belt (100), and
b) at least one left flank surface (131), arranged obliquely to the conveyor belt plane (TE), and connecting the guide surface (120) with the base surface (132), and
c) at least one right flank surface (133),arranged obliquely to the conveyor belt plane (TE), and connecting the guide surface (120) with the base surface (132), wherein
d) a base width (BB) of the base surface (132), perpendicularly to the longitudinal axis of the notch (130), is smaller than an opening width (OB) of the notch (130) perpendicularly to the longitudinal axis of the notch (130) and in a plane with the guide surface (120).

7. Transport system (400) according to one of the claims 1 to 6,
**characterized in that**
the outer surface of the at least one drive roller (200) includes two edge regions (222) and a central region (221) arranged between the edge regions (222) along the axis of rotation (RA), wherein the guide ridges (231) are arranged exclusively in the central region (221) and the drive ridges (232) are arranged exclusively in the edge regions (222).

8. Transport system (400) according to one of the claims 1 to 7,
**characterized in that**
a diameter (D) of the drive roller (200) measured perpendicularly to the axis of rotation (RA) amounts to 15 mm to 45 mm, preferably 25 mm to 35 mm.

9. Method of producing a transport system (400) according to one of the claims 1 to 8
comprising the following steps in the named sequence:
a) providing a roller blank with an outer surface, rotationally symmetrical about an axis of rotation (RA), and with two edge regions (222) and a central region (221) arranged along the axis of rotation (RA), between the edge regions (222), and
b) longitudinal removal of material from the outer surface to generate longitudinal grooves, extending along the axis of rotation (RA), in the outer surface with drive ridges (232) lying therebetween, in the edge regions (222) and in the central region (221), and
c) transverse removal of material from the outer surface to generate transverse grooves in the outer surface, extending in the circumferential direction of the roller blank about the axis of rotation (RA), with guide ridges (232) lying therebetween, in the central region (221)
d) providing a blank for the conveyor belt (100) of the transport system (400) with at least one guide surface (120), oriented along a conveyor belt plane (TE) of the conveyor belt (100), for guiding the conveyor belt (100), on the guiding side of the conveyor belt (100),
e) introducing a number of notches (130), including the guide notches (137) and the drive notches (138) of the conveyor belt (100), into the at least one guide surface (120), and
f) smoothing a base surface (132), a left flank surface (131) and/or a right flank surface (133) of the notches (130).

10. Method according to claim 9
**characterized in that**
the longitudinal removal occurs over an entire length (L) of the roller blank, along the axis of rotation (RA).

11. Method according to claim 10,
**characterized in that**
the introduction includes machining of the guide surface (120), preferably milling and/or grinding of the notches (130) into the at least one guide surface (120).

12. Method according to one of the claims 10 to 11,
**characterized in that**
the smoothing includes a heating of at least the base surface (132), the left flank surface (131) and/or the right flank surface (133) of the notches (130) with a heat intensity, wherein the heat intensity is selected to heat material of the conveyor belt (100), removed in the introduction of the notches, to above a glass transition temperature, melting temperature and/or decomposition temperature of the material, and preferably to heat the guide surface (120) to a temperature below a glass transition temperature, melting temperature and/or decomposition temperature of the material.

13. Method according to claim 12,
**characterized in that**
the heating includes a global heating of the base surface (132), the left flank surface (131) and the right flank surface (133) of the notches (130) and the guide surface (120), preferably with a hot air blower.

## Revendications

1. Système de transport (400) pour transporter des marchandises dans une direction de transport (TR) le long d'un plan de bande transporteuse (TE) d'une bande transporteuse (100),
a. la bande transporteuse (100) comprenant sur un côté porteur de la bande transporteuse (100) au moins une surface porteuse (110) alignée le long du plan de la bande transporteuse (TE) pour transporter les marchandises, et
b. la bande transporteuse (100) comprenant sur un côté de guidage de la bande transporteuse (100) au moins une surface de guidage (120) alignée le long du plan de la bande transporteuse (TE) pour guider la bande transporteuse (100), et
c. la surface de guidage (120) comprenant une pluralité de rainures (130),
d. les rainures (130) comprenant une pluralité de rainures de guidage (137), un axe longitudinal de chacune des rainures de guidage (137) étant aligné le long de la direction de transport (TR), et
e. le système de transport (400) comprenant au moins un rouleau d'entraînement (200) pour entraîner la bande transporteuse (100) reposant contre une surface latérale du rouleau d'entraînement (200) en faisant tourner le rouleau d'entraînement (200) autour d'un axe de rotation (AR),
f. la surface latérale comprenant une pluralité de nervures,
g. les nervures comprenant un certain nombre de nervures d'entraînement (232) pour entraîner la bande transporteuse (100) le long de la direction de transport (TR), avec un axe longitudinal de chacune des nervures d'entraînement (232) aligné le long de l'axe de rotation (RA).
h. les nervures comprenant une pluralité de nervures de guidage (231) s'engageant dans les rainures de guidage (137) pour guider la bande transporteuse (100) le long de la direction de transport (TR), chacune des nervures de guidage (231) tournant autour de l'axe de rotation (RA) dans la direction circonférentielle du rouleau d'entraînement (200),
**caractérisé en ce que**
i. les rainures comprennent un certain nombre de rainures d'entraînement (138), un axe longitudinal de chacune des rainures d'entraînement (138) étant orienté dans une direction transversale (QR) transversale à la direction de transport (TR), et les nervures d'entraînement s'engageant dans les rainures d'entraînement (138) pour entraîner la bande transporteuse (100),
j. au moins une rainure de guidage (137) de la bande transporteuse (100) et la nervure de guidage (231) du rouleau d'entraînement (200) s'engageant dans celle-ci étant conçues de telle sorte qu'en l'absence de sollicitation transversale de la bande transporteuse (100) dans la direction transversale (QR) il existe un jeu transversal mécanique dans la direction transversale (QR) entre la rainure de guidage (137) et la nervure de guidage (231).
k. une pluralité de rainures de guidage (137) et les nervures de guidage (231) s'y engageant étant conçues de telle manière qu'en l'absence de sollicitation transversale de la bande transporteuse (100), il existe un jeu transversal différent entre les rainures de guidage (137) et les nervures de guidage associées (231).

2. Système de transport (400) selon la revendication 1,
**caractérisé en ce que**
une largeur de base (BB) d'au moins une rainure (130) de la bande transporteuse (100) est de 100 % à 150 %, de préférence de 110 % à 130 %, d'une largeur parallèle à la largeur de base (BB) de la nervure s'engageant dans la rainure (130) du rouleau d'entraînement (200).

3. Système de transport (400) selon l'une des revendications 1 à 2,
**caractérisé en ce que**
la surface de guidage (120) de la bande transporteuse (100) comprend deux régions de bord (122) et une région centrale (121) disposées dans la direction transversale (QR) entre les régions de bord (122), les rainures de guidage (137) étant disposées dans la région centrale (121), et les rainures d'entraînement (138) étant disposées dans les régions de bord (122) et dans la région centrale (121), aucune rainure de guidage (137) n'étant disposée dans les régions de bord (122).

4. Système de transport (400) selon l'une des revendications 1 à 3,
**caractérisé en ce que**
la bande transporteuse (100) a une épaisseur de bande transporteuse (TD) perpendiculaire au plan de la bade transporteuse (TE) de 1 mm à 5 mm.

5. Système de transport (400) selon l'une des revendications 1 à 4,
**caractérisé en ce que**
la bande transporteuse (100) comprend au moins une couche de guidage contenant les rainures (130), au moins une couche de support formant la surface porteuse (110) et au moins une couche de renfort pour le renforcement mécanique de la bande transporteuse.

6. Système de transport (400) selon l'une des revendications 1 à 5,
**caractérisé en ce que**
au moins une des rainures (130) comprend
a. au moins une surface inférieure (132) pour limiter la profondeur de pénétration de la nervure de guidage (231) ou de la nervure d'entraînement (232) dans la bande transporteuse (100) et
b. au moins une surface de flanc gauche (131) disposée obliquement par rapport au plan de la bande transporteuse (TE) et reliant la surface de guidage (120) à la surface inférieure (132) et
c. au moins une surface de flanc droit (133) disposée obliquement par rapport au plan de la bande transporteuse (TE) et reliant la surface de guidage (120) à la surface de base (132),
d. une largeur inférieure (BB) de la surface inférieure (132) perpendiculaire à l'axe longitudinal de la rainure (130) étant inférieure à une largeur d'ouverture (OB) de la rainure (130) perpendiculaire à l'axe longitudinal de la rainure (130) et dans un plan avec la surface de guidage (120).

7. Système de transport (400) selon l'une des revendications 1 à 6,
**caractérisé en ce que**
la surface externe de l'au moins un rouleau d'entraînement (200) comprend deux régions de bord (222) et une région centrale (221) disposée le long de l'axe de rotation (RA) entre les régions de bord (222), les nervures de guidage (231) étant disposées exclusivement dans la région centrale (221) et les nervures d'entraînement (232) étant disposées exclusivement dans les régions de bord (222).

8. Système de transport (400) selon l'une des revendications 1 à 7,
**caractérisé en ce que**
un diamètre (D) du rouleau d'entraînement (200), mesuré perpendiculairement à l'axe de rotation (RA), est de 15 mm à 45 mm, de préférence de 25 mm à 35 mm.

9. Procédé de fabrication d'un système de transport (400) selon l'une des revendications 1 à 8, comportant les étapes suivantes dans l'ordre mentionné :
a. fournir une ébauche de rouleau comprenant une surface latérale qui est symétrique en rotation autour d'un axe de rotation (RA) comprenant deux régions de bord (222) et une région centrale (221) disposée entre les régions de bord (222) le long de l'axe de rotation (AR), et
b. enlèvement longitudinal de matière de la surface latérale pour produire des rainures longitudinales dans la surface latérale s'étendant le long de l'axe de rotation (RA) avec des nervures d'entraînement (232) entreposées dans les régions de bord (222) et dans la région centrale (221), et
c. enlèvement transversal de matière de la surface latérale pour produire des rainures transversales dans la surface latérale s'étendant dans la direction circonférentielle de l'ébauche de rouleau autour de l'axe de rotation (RA) avec des nervures de guidage (232) entreposées dans la région centrale (221).
d. fournir une ébauche pour la bande transporteuse (100) du système de transport (400) avec au moins une surface de guidage (120) alignée le long d'un plan de bande transporteuse (TE) de la bande transporteuse (100) pour guider la bande transporteuse (100) sur le côté de guidage de la bande transporteuse (100),
e. introduire un certain nombre de rainures (130) comprenant les rainures de guidage (137) et les rainures d'entraînement (138) de la bande transporteuse (100) dans l'au moins une surface de guidage (120), et
f. lisser une surface inférieure (132), une surface de flanc gauche (131) et/ou une surface de flanc droit (133) des rainures (130).

10. Procédé selon la revendication 9,
**caractérisé en ce que**
l'enlèvement longitudinal s'effectue sur toute une longueur (L) de l'ébauche de rouleau selon l'axe de rotation (RA).

11. Procédé selon la revendication 10,
**caractérisé en ce que**
l'introduction comprend un usinage de la surface de guidage (120), de préférence un fraisage et/ou un ponçage des rainures (130) dans l'au moins une surface de guidage (120).

12. Procédé selon l'une des revendications 10 à 11,
**caractérisé en ce que**
le lissage comprend le chauffage d'au moins la surface inférieure (132), la surface du flanc gauche (131) et/ou la surface du flanc droit (133) des rainures (130) avec une intensité thermique, l'intensité thermique étant suffisante pour chauffer le matériau de la bande transporteuse (100) au-dessus d'une température de transition vitreuse, d'une température de fusion et/ou d'une température de décomposition du matériau, et de préférence pour chauffer la surface de guidage (120) à une température inférieure à une température de transition vitreuse, une température de fusion et/ou une température de décomposition du matériau.

13. Procédé selon la revendication 12,
**caractérisé en ce que**
le chauffage comprend un chauffage global de la surface inférieure (132), de la surface de flanc gauche (131) et de la surface de flanc droit (133) des rainures (130) et de la surface de guidage (120), de préférence avec une soufflante à air chaud.
